# EUROPEAN PATENT APPLICATION

(11) **EP 4 576 918 A1**
(43) Date of publication of application: **25.06.2025**
(21) Application number: 23842143.2
(22) Date of filing: 10.07.2023
(51) Int. Cl.: H04W 74/08

(54) **METHOD AND APPARATUS IN COMMUNICATION NODE USED IN WIRELESS COMMUNICATION**

(30) Priority: 19.07.2022 CN 202210849407
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/106498
(87) International publication number: WO 2024/017078

(57) **Abstract**

Disclosed in the present application are a method and apparatus in a communication node used in wireless communication. The method comprises: a communication node determining K1, wherein K1 is a positive integer greater than 1; starting a first time window at a first moment; monitoring first signaling in the first time window, wherein the first signaling is used for scheduling a random access response; and sending a first preamble in at least a first time-frequency resource among K1 time-frequency resources, wherein any two time-frequency resources among the K1 time-frequency resources do not overlap in a time domain, the first time-frequency resource is the earliest time-frequency resource among the K1 time-frequency resources, the first moment is related to a cut-off moment of at least the first time-frequency resource, the first moment is not earlier than the cut-off moment of the first time-frequency resource and is earlier than a cut-off moment of a second time-frequency resource, the second time-frequency resource is the latest time-frequency resource among the K1 time-frequency resources, and an expiration moment of the first time window is later than the cut-off moment of the second time-frequency resource.

## Description

### Technical Field

This application relates to a transmission method and apparatus in a wireless communication system, and in particular, to a random access transmission method and apparatus.

### Related Art

Coverage is one of key factors considered by operators during commercial deployment of cellular communication networks, because it directly affects service quality, capital expenditure (CAPEX), and operating costs (OPEX). In most actual deployment scenarios, uplink (UL) performance may be a bottleneck, and in some emerging vertical use cases such as video uploading, uplink traffic is very large. In Rel-17 "New Radio (NR) coverage enhancements" work item (WI), NR coverage of a physical uplink shared channel (PUSCH), a physical uplink control channel (PDCCH), and a Message 3 (Msg3) are extended and enhanced. However, improvement of physical random access channel (PRACH) coverage has not been resolved yet. Because the PRACH transmission is very important in many processes, such as initial access and beam failure recovery, Rel-18 "Further NR coverage enhancement" WI has been introduced to further enhance uplink coverage of the PRACH.

### SUMMARY

In NR, each time a user equipment (UE) sends a preamble, a ra-ResponseWindow is started to receive a random access response (RAR), and only after the ra-ResponseWindow expires, another preamble can be sent. For Rel-18 PRACH enhancement, a feasible manner is PRACH repetition. When the UE sends a preamble through the PRACH repetition, existing RAR receiving mechanisms cannot meet requirements. Therefore, RAR receiving needs to be enhanced.

In view of the foregoing problem, this application provides a solution to random access. An NR system is used as an example in the description of the foregoing problem. This application is also applicable to, for example, a scenario of an LTE system. Further, although this application is originally aimed at a Uu air interface, this application can also be applied to a PC5 interface. Further, although this application is originally aimed at a scenario including a terminal and a base station, this application can also be applied to a scenario of Vehicle-to-Everything (V2X), a scenario of communication between a terminal and a relay, a scenario of communication between a relay and a base station, to obtain a technical effect similar to that in a scenario including a terminal and a base station. Further, although this application is originally aimed at a scenario including a terminal and a base station, this application can also be applied to a communication scenario of Integrated Access and Backhaul (IAB), to obtain a technical effect similar to that in a scenario including a terminal and a base station. Further, although this application is originally aimed at a terrestrial network (TN) scenario, this application can also be applied to a non-terrestrial network (NTN) communication scenario, to obtain a technical effect similar to that in a TN scenario. In addition, using a unified solution in different scenarios also reduces hardware complexity and costs.

In an embodiment, for explanations of terminology in this application, refer to definitions in 3GPP TS 36series.

In an embodiment, for explanations of terminology in this application, refer to definitions in 3GPP TS 38series.

In an embodiment, for explanations of terminology in this application, refer to definitions in 3GPP TS 37series.

In an embodiment, for explanations of terminology in this application, refer to definitions in Institute of Electrical and Electronics Engineers (IEEE) protocols.

It should be noted that embodiments of any node in this application and features in the embodiments may be applied to any other node without conflict. The embodiments of this application and the features in the embodiments may be combined without conflict.

This application discloses a method in a first node used in wireless communication, including:
determining K1, where K1 is a positive integer greater than 1; starting a first time window at a first moment; monitoring a first signaling in the first time window, where the first signaling is used for scheduling a random access response; and
sending a first preamble over at least a first time-frequency resource in K1 time-frequency resources, where the first time-frequency resource is an earliest time-frequency resource in the K1 time-frequency resources,
where the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

In an embodiment, a problem to be resolved in this application includes: how to receive an RAR when a UE sends a preamble through PRACH repetition.

In an embodiment, a problem to be resolved in this application includes: how to determine a time interval for monitoring a first physical downlink control channel (PDCCH) when a preamble is sent over at least the first time-frequency resource in the K1 time-frequency resources.

In an embodiment, a problem to be resolved in this application includes: how to determine the expiration moment of the first time window when a preamble is sent over at least the first time-frequency resource in the K1 time-frequency resources.

In an embodiment, a problem to be resolved in this application includes: how to determine an end moment of the first time window when a preamble is sent over at least the first time-frequency resource in the K1 time-frequency resources.

In an embodiment, a problem to be resolved in this application includes: how to send a preamble over each of the K1 time-frequency resources.

In an embodiment, a problem to be resolved in this application includes: how to determine a first Radio Network Temporary Identity (RNTI).

In an embodiment, a problem to be resolved in this application includes: how to determine the first RNTI.

In an embodiment, a characteristic of the foregoing method includes: multiple preambles can be sent in the first time window.

In an embodiment, a characteristic of the foregoing method includes: at least a cut-off moment of an earliest time-frequency resource in the K1 time-frequency resources is used for determining a moment at which the first time window is started.

In an embodiment, a characteristic of the foregoing method includes: one time-frequency resource of the K time-frequency resources is used for calculating the first RNTI.

In an embodiment, a characteristic of the foregoing method includes: only the first time-frequency resource in the K time-frequency resources is used for calculating the first RNTI.

In an embodiment, a characteristic of the foregoing method includes: determining K1 according to at least channel quality.

In an embodiment, a characteristic of the foregoing method includes: determining K1 according to at least an RRC message.

In an embodiment, benefits of the foregoing method include: enhancing coverage.

In an embodiment, benefits of the foregoing method include: shortening an initial access delay.

In an embodiment, benefits of the foregoing method include: reducing downlink signaling overheads.

According to one aspect of this application, the monitoring the first signaling in the first time window is used for determining whether to send a preamble over at least the second time-frequency resource.

In an embodiment, a problem to be resolved in this application includes: how to send a preamble over each of the K1 time-frequency resources.

In an embodiment, a problem to be resolved in this application includes: how to send a preamble over each of the K1 time-frequency resources.

In an embodiment, a characteristic of the foregoing method includes: determining whether to send a preamble over at least the second time-frequency resource depending on whether the random access response has been successfully received.

In an embodiment, benefits of the foregoing method include: avoiding unnecessary preamble transmission.

In an embodiment, benefits of the foregoing method include: reducing signaling overheads.

According to one aspect of this application, the method includes:
receiving the first signaling; and receiving a first RAR according to scheduling by the first signaling.

According to one aspect of this application, the method includes:
determining, according to content of the first RAR, whether to send a preamble over at least the second time-frequency resource.

In an embodiment, a problem to be resolved in this application includes: how to send a preamble over each of the K1 time-frequency resources.

In an embodiment, a characteristic of the foregoing method includes: the first RAR indicates whether to send a preamble over at least the second time-frequency resource.

In an embodiment, a characteristic of the foregoing method includes: a format of the first RAR is used for determining whether to send a preamble over at least the second time-frequency resource.

In an embodiment, benefits of the foregoing method include: avoiding unnecessary preamble transmission.

In an embodiment, benefits of the foregoing method include: reducing signaling overheads.

According to one aspect of this application, the method includes:
sending a third message as a response to the first RAR being successfully received in the first time window,
where the K1 time-frequency resources are respectively associated with at least two downlink reference signal (RS) resources, the third message is associated with a target downlink RS resource, and the target downlink RS resource is one of the at least two downlink RS resources; and a control resource set (CORESET) or search space to which the first signaling belongs is used for determining the target downlink RS resource.

In an embodiment, the at least two downlink RS resources are K1 downlink RS resources.

In an embodiment, the at least two downlink RS resources are no more than K1 downlink RS resources.

In an embodiment, a problem to be resolved in this application includes: how to determine a downlink RS resource used for receiving the third message.

In an embodiment, a problem to be resolved in this application includes: how to determine a space parameter used for receiving a third message.

In an embodiment, a characteristic of the foregoing method includes: determining, by using the first signaling, a downlink RS resource used for receiving the third message.

In an embodiment, a characteristic of the foregoing method includes: determining, by using the first signaling, a space parameter used for receiving the third message.

In an embodiment, benefits of the foregoing method include: enabling the UE to determine a downlink RS resource used for receiving the third message.

In an embodiment, benefits of the foregoing method include: enabling the UE to determine a space parameter used for receiving the third message.

In an embodiment, benefits of the foregoing method include: reducing signaling overheads.

According to one aspect of this application, the method includes:
determining that the first time window expires; and updating a first counter according to K1 as a response to the expiration of the first time window,
where the first counter is configured to count a number of preambles sent.

In an embodiment, a problem to be resolved in this application includes: how to update the first counter.

In an embodiment, benefits of the foregoing method include: avoiding an excessively large quantity of times of random access.

In an embodiment, benefits of the foregoing method include: reducing contention conflicts.

According to one aspect of this application, the method includes:
restarting the first time window at a second moment; and
sending a second preamble over a target time-frequency resource,
where the second moment is related to a cut-off moment of the target time-frequency resource; and the target time-frequency resource is a time-frequency resource in the K1 time-frequency resources other than the first time-frequency resource.

According to one aspect of this application, K1 is used for determining an expiration moment of the first time window.

This application discloses a method in a second node used in wireless communication, including:
receiving a first preamble,
where K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

According to one aspect of this application, the monitoring the first signaling in the first time window is used for determining whether to send a preamble over at least the second time-frequency resource.

According to one aspect of this application, the method includes:
sending the first signaling; and sending a first RAR, where the first signaling is used for scheduling the first RAR.

According to one aspect of this application, the sender of the first preamble determines, according to content of the first RAR, whether to send a preamble over at least the second time-frequency resource.

According to one aspect of this application, the method includes:
receiving a third message,
where successful receiving of the first RAR by the sender of the first preamble in the first time window is used for determining to send the third message; the K1 time-frequency resources are respectively associated with at least two downlink RS resources, the third message is associated with a target downlink RS resource, and the target downlink RS resource is one of the at least two downlink RS resources; and a CORESET or search space to which the first signaling belongs is used for determining the target downlink RS resource.

In an embodiment, the at least two downlink RS resources are K1 downlink RS resources.

In an embodiment, the at least two downlink RS resources are no more than K1 downlink RS resources.

According to one aspect of this application, determining by the sender of the first preamble that the first time window expires is used for determining to update a first counter according to K1, where the first counter is configured to count a number of preambles sent.

According to one aspect of this application, the first time window is restarted by the sender of the first preamble at a second moment; and a second preamble is received, where the second preamble is sent by the sender of the first preamble over a target time-frequency resource; the second moment is related to a cut-off moment of the target time-frequency resource; and the target time-frequency resource is a time-frequency resource in the K1 time-frequency resources other than the first time-frequency resource..

According to one aspect of this application, K1 is used for determining an expiration moment of the first time window.

This application discloses a first node used in wireless communication, including:
a first receiver, configured to determine K1, where K1 is a positive integer greater than 1; start a first time window at a first moment; and monitor a first signaling in the first time window, where the first signaling is used for scheduling a random access response;
a first transmitter, configured to send a first preamble over at least a first time-frequency resource in K1 time-frequency resources, where the first time-frequency resource is an earliest time-frequency resource in the K1 time-frequency resources,
where the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

This application discloses a second node used in wireless communication, including:
a second receiver, configured to receive a first preamble,
where K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

In an embodiment, compared with a conventional solution, this application has the following advantages:
- enhancing coverage;
- shortening an initial access delay;
- reducing downlink signaling overheads;
- avoiding unnecessary preamble transmission;
- reduce signaling overheads;
- enabling the UE to determine a downlink RS resource used for receiving the third message;
- enabling the UE to determine a space parameter used for receiving the third message; and
- reducing signaling overheads.

### BRIEF DESCRIPTION OF THE DRAWINGS

Other features, objectives, and advantages of this application will become more apparent by reading the detailed description of non-restrictive embodiments made with reference to the following accompanying drawings.
FIG. 1 is a flowchart of transmission of a first preamble according to an embodiment of this application;
FIG. 2 is a schematic diagram of a network architecture according to an embodiment of this application;
FIG. 3 is a schematic diagram of an embodiment of a radio protocol architecture of a user plane and a control plane according to an embodiment of this application;
FIG. 4 is a schematic diagram of a first communication device and a second communication device according to an embodiment of this application;
FIG. 5 is a flowchart of radio signal transmission according to an embodiment of this application;
FIG. 6 is a flowchart of radio signal transmission according to another embodiment of this application;
FIG. 7 is a flowchart of radio signal transmission according to still another embodiment of this application;
FIG. 8 is a flowchart of radio signal transmission according to yet another embodiment of this application;
FIG. 9 is a schematic diagram of a MAC subheader of a third candidate RAR according to an embodiment of this application;
FIG. 10 is a flowchart of transmission of a second preamble according to an embodiment of this application;
FIG. 11 is a schematic diagram of K1 time-frequency resources and a first time window according to an embodiment of this application;
FIG. 12 is a schematic diagram of K1 time-frequency resources and a first time window according to another embodiment of this application;
FIG. 13 is a structural block diagram of a processing apparatus used in a first node according to an embodiment of this application;
FIG. 14 is a structural block diagram of a processing apparatus used in a second node according to an embodiment of this application; and
FIG. 15 is a schematic diagram of monitoring a first signaling being used for determining whether to send a preamble according to an embodiment of this application.

### DETAILED DESCRIPTION

The technical solutions of this application will be described in further detail below with reference to the accompanying drawings. It should be noted that the embodiments of this application and the features in the embodiments may be combined without conflict.

### Embodiment 1

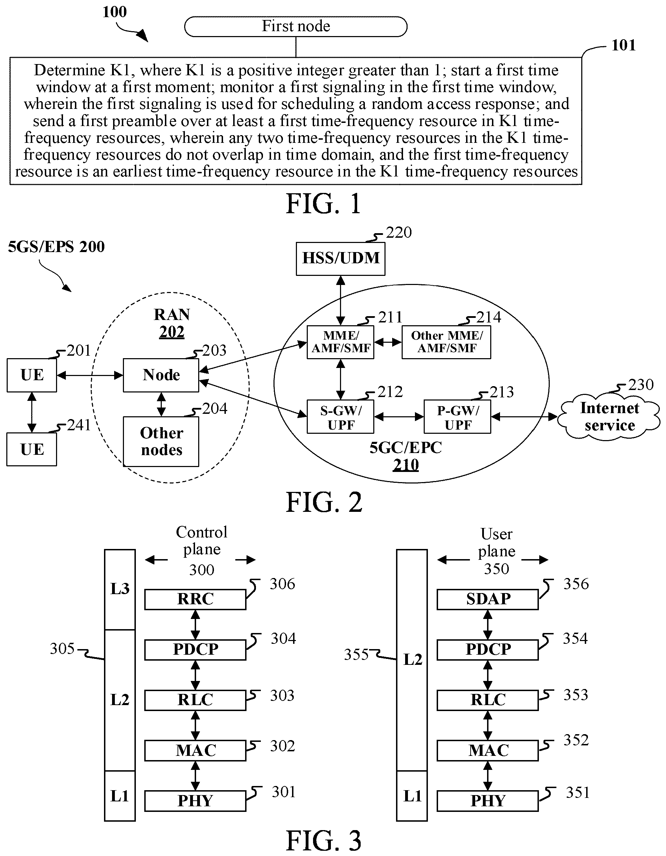

Embodiment 1 exemplarily shows a flowchart of transmission of a first preamble according to an embodiment of this application, as shown in FIG. 1. In FIG. 1, each block represents a step. It should be particularly noted that the order of the blocks in the figure does not represent a chronological order of the steps represented by the blocks.

In Embodiment 1, in step 101, a first node in this application determines K1, where K1 is a positive integer greater than 1; starts a first time window at a first moment; monitors a first signaling in the first time window, where the first signaling is used for scheduling a random access response; and sends a first preamble over at least a first time-frequency resource in K1 time-frequency resources, where the first time-frequency resource is an earliest time-frequency resource in the K1 time-frequency resources. The first moment is related to at least a cut-off moment of the first time-frequency resource. The first moment is not earlier than a cut-off moment of the first time-frequency resource and is earlier than a cut-off moment of a second time-frequency resource, the second time-frequency resource being a latest time-frequency resource in the K1 time-frequency resources. An expiration moment of the first time window is later than the cut-off moment of the second time-frequency resource.

In an embodiment, the "determining K1" includes: determining K1 according to at least channel quality.

In an embodiment, the "determining K1" includes: determining K1 according to at least channel quality and at least one offset.

In an embodiment, the "determining K1" includes: determining K1 according to at least a reference signal received power (RSRP).

In an embodiment, the "determining K1" includes: determining K1 according to at least an RSRP measurement result and an RSRP threshold.

In an embodiment, the "determining K1" includes: determining K1 according to at least an RSRP measurement result, at least one offset, and an RSRP threshold.

In an embodiment, the "determining K1" includes: determining K1 according to a random access response.

In an embodiment, the "determining K1" includes: determining K1 according to at least an RRC message.

In an embodiment, the "determining K1" includes: determining K1 according to at least an RRC message and channel quality.

In an embodiment, K1 is related to at least channel quality.

In an embodiment, K1 is preconfigured.

In an embodiment, K1 is determined in Q1 candidate integers, where the Q1 candidate integers are configured through an RRC message.

In a sub-embodiment of this embodiment, K1 is determined in the Q1 candidate integers according to at least channel quality.

In a sub-embodiment of this embodiment, K1 is determined in the Q1 candidate integers according to at least channel quality and at least one offset.

In an embodiment, K1 is configurable.

In an embodiment, K1 is variable.

In an embodiment, K1 is countable.

In an embodiment, a maximum value of K1 does not exceed a positive integer.

In an embodiment, the RSRP measurement result is an RSRP measurement result for at least one downlink reference signal.

In an embodiment, the RSRP measurement result is an RSRP measurement result for a downlink path loss reference.

In an embodiment, the first moment is a PDCCH occasion.

In an embodiment, the first moment is a symbol.

In an embodiment, the first moment is a slot.

In an embodiment, the first moment is one millisecond.

In an embodiment, the first moment is related to a system configuration.

In an embodiment, the first moment is related to a system frame.

In an embodiment, the first moment is related to a radio frame.

In an embodiment, the first moment is related to a sub-frame.

In an embodiment, the "starting a first time window" includes: causing the first time window to run starting from 0, where the first time window is counted up.

In an embodiment, the "starting a first time window" includes: causing the first time window to run starting from a maximum value of the first time window, where the first time window is counted down.

In an embodiment, the starting means start.

In an embodiment, the starting means beginning.

In an embodiment, after the first time window is started, a value of the first time window is incremented.

In an embodiment, after the first time window is started, a value of the first time window is decremented.

In an embodiment, the first time window is used for determining a time interval.

In an embodiment, the first time window includes a positive integer number of milliseconds.

In an embodiment, the first time window is a ra-ResponseWindow.

In an embodiment, a name of the first time window includes ra-ResponseWindow.

In an embodiment, a name of the first time Window includes at least one of ra, Response, Window, CE, COVERAGE, or ENHANCEMENT.

In an embodiment, the monitoring means monitor.

In an embodiment, the monitoring means determining whether an object being monitored exists.

In an embodiment, the monitoring means monitoring.

In an embodiment, the monitoring means detecting.

In an embodiment, the monitoring means performing cyclic redundancy check (CRC) detection.

In an embodiment, the monitoring means performing maximum likelihood detection.

In an embodiment, the monitoring means blind detection.

In an embodiment, the first signaling is monitored on a PDCCH.

In an embodiment, the first signaling is monitored on at least one search space (SS).

In an embodiment, the first signaling is monitored on a first common search space (CSS).

In an embodiment, the first CSS is associated with a primary cell (PCell).

In an embodiment, the first CSS includes at least one search space.

In an embodiment, the first CSS is at least one common search space dedicated to PRACH coverage enhancement.

In an embodiment, the first CSS is a Type 1-PDCCH CSS set.

In an embodiment, the first CSS is configured in PDCCH-ConfigCommon.

In an embodiment, the first CSS is configured by a ra-SearchSpace in PDCCH-ConfigCommon.

In an embodiment, the first CSS is configured by an RRC field whose name includes ra-SearchSpace in PDCCH-ConfigCommon.

In an embodiment, the first CSS is configured in recoverySearchSpaceId.

In an embodiment, the first CSS is configured by an RRC field whose name includes recoverySearchSpaceId.

In an embodiment, the first CSS is dedicated to random access.

In an embodiment, the first CSS is dedicated to beam failure recovery (BPR).

In an embodiment, the first CSS is associated with at least one CORESET.

In an embodiment, the first CSS is associated with a CORESET.

In an embodiment, the first CSS is associated with a first CORESET.

In an embodiment, the first signaling is transmitted on a PDCCH.

In an embodiment, the first signaling is a PDCCH transmission.

In an embodiment, the first signaling is downlink control information (DCI).

In an embodiment, the first signaling is a piece of DCI, and a format of the first signaling is DCI format 1_0.

In an embodiment, the first signaling is for a random access response.

In an embodiment, the first signaling is scrambled by a first RNTI, and the first RNTI is used for monitoring a random access response.

In an embodiment, the first signaling is DCI scrambled by a first RNTI.

In an embodiment, the first RNTI is an RA_RNTI.

In an embodiment, the first RNTI is a bit string.

In an embodiment, the first RNTI is a non-negative integer.

In an embodiment, the first RNTI is a positive integer.

In an embodiment, the first RNTI is used only for a random access response.

In an embodiment, the first RNTI is used at least for a random access response.

In an embodiment, the first RNTI is used only for monitoring or receiving a random access response.

In an embodiment, the first RNTI is used at least for monitoring or receiving a random access response.

In an embodiment, one time-frequency resource of the K time-frequency resources is used for calculating the first RNTI.

In an embodiment, each time-frequency resource of the K time-frequency resources is used for calculating the first RNTI.

In an embodiment, any time-frequency resource of the K time-frequency resources is used for calculating the first RNTI.

In an embodiment, only the first time-frequency resource in the K time-frequency resources is used for calculating the first RNTI.

In an embodiment, the first signaling is used for scheduling a physical downlink shared channel (PDSCH).

In an embodiment, the first signaling is used for scheduling a PDSCH, and the PDSCH is used for carrying at least a random access response.

In an embodiment, the first signaling is used for scheduling a PDSCH, and the PDSCH is used for carrying a random access response.

In an embodiment, a PDSCH scheduled by the first signaling is used for carrying at least a random access response.

In an embodiment, a PDSCH scheduled by the first signaling is used for carrying a random access response.

In an embodiment, the first signaling is used for scheduling a random access response for a preamble sent over at least one time-frequency resource of the K1 time-frequency resources.

In an embodiment, the first signaling is used for scheduling a random access response for the first preamble.

In an embodiment, the first signaling is used for scheduling a random access response for any preamble sent over the K1 time-frequency resources.

In an embodiment, the first signaling is used for scheduling a random access response for each preamble sent over the K1 time-frequency resources.

In an embodiment, a random access response scheduled by the first signaling belongs to a first candidate RAR set.

In a sub-embodiment of this embodiment, the first candidate RAR set includes a first candidate RAR, the first candidate RAR includes one Medium Access Control (MAC) subheader and one MAC RAR, and the MAC subheader includes an Extension (E) field, a Type (T) field, and a Random Access preamble IDentifier (RAPID) field.

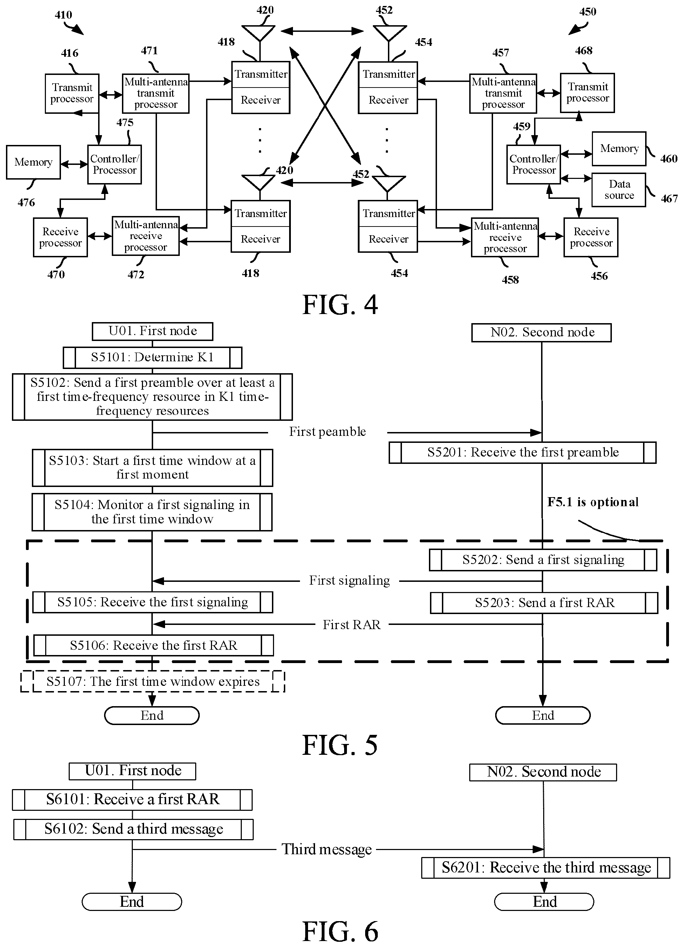

In a dependent embodiment of this sub-embodiment, a format of the MAC subheader is the same as that of FIG. 6.1.5-2 of 3GPP TS 38.321.

In a dependent embodiment of this sub-embodiment, the MAC subheader includes an E field, a T field, and a RAPID field. For meanings of the E field, the T field, and the RAPID field, refer to Clause 6.2.2 of 3GPP TS 38.321.

In a dependent embodiment of this sub-embodiment, a format of the MAC RAR is the same as that of FIG. 6.2.3-1 of 3GPP TS 38.321.

In a dependent embodiment of this sub-embodiment, the MAC RAR includes a Timing Advanced Command field, a UL Grant field, and a Temporary C-RNTI field. For meanings of the Timing Advanced Command field, the UL Grant field, and the Temporary C-RNTI field, refer to Clause 6.2.3 of 3GPP TS 38.321.

In a sub-embodiment of this embodiment, the first candidate RAR set includes a second candidate RAR, the second candidate RAR only includes one MAC subheader, and the MAC subheader includes an E field, a T field, a Reserved (R) field, an R field, and a Backoff Indicator (BI) field.

In a dependent embodiment of this sub-embodiment, a format of the MAC subheader is the same as that of FIG. 6.1.5-1 of 3GPP TS 38.321.

In a dependent embodiment of this sub-embodiment, the MAC subheader includes an E field, a T field, an R field, an R field, and a BI field. For the E field, the T field, the R field, the R field, and the BI field, refer to Clause 6.2.2 of 3GPP TS 38.321.

In a dependent embodiment of this sub-embodiment, the second MAC subheader includes a backoff indicator (BI) field.

In a subordinate embodiment of this dependent embodiment, the BI field includes 3 bits.

In a subordinate embodiment of this dependent embodiment, the BI field includes 4 bits.

In a subordinate embodiment of this dependent embodiment, the BI field includes 5 bits.

In a sub-embodiment of this embodiment, the first candidate RAR set includes a third candidate RAR, the third candidate RAR only includes one MAC subheader, and a format of the MAC subheader includes at least an E field, a T field, and a first field.

In a dependent embodiment of this sub-embodiment, the MAC subheader occupies one byte.

In a dependent embodiment of this sub-embodiment, the MAC subheader occupies one octet.

In a dependent embodiment of this sub-embodiment, the MAC subheader occupies 8 bits.

In a dependent embodiment of this sub-embodiment, for the E field, refer to Clause 6.2.2 of 3GPP TS 38.321.

In a dependent embodiment of this sub-embodiment, the T field is set to 1, and the T field is used for determining that the MAC subheader includes a Random Access Preamble ID field.

In a dependent embodiment of this sub-embodiment, the T field is set to 0, and the T field is used for determining that the MAC subheader does not include a Random Access Preamble ID field.

In a dependent embodiment of this sub-embodiment, the T field is used for indicating whether the MAC subheader includes a Random Access Preamble ID field or a Backoff Indicator field.

In a dependent embodiment of this sub-embodiment, the T field is used for indicating whether the MAC subheader includes a Random Access Preamble ID field or the first field.

In a dependent embodiment of this sub-embodiment, the T field is set to 0, and the T field indicates that the MAC subheader includes a Backoff Indicator field.

In a dependent embodiment of this sub-embodiment, the T field is set to 0, and the T field indicates that the MAC subheader includes the first field.

In a dependent embodiment of this sub-embodiment, the first field is used for indicating whether to send a preamble over at least the second time-frequency resource.

In a dependent embodiment of this sub-embodiment, the first field is used for determining content of the first RAR.

In a dependent embodiment of this sub-embodiment, the first field is used for determining a quantity of times of repetition of a preamble.

In a dependent embodiment of this sub-embodiment, the first field is used for determining a quantity of times of repetition of sending a preamble next time.

In a dependent embodiment of this sub-embodiment, the first field indicates a quantity of times of repetition of a preamble.

In a dependent embodiment of this sub-embodiment, the first field indicates a quantity of times of repetition of backoff of a preamble.

In a dependent embodiment of this sub-embodiment, the first field indicates to increase a quantity of times of repetition of a preamble.

In a dependent embodiment of this sub-embodiment, the first field indicates to reduce a quantity of times of repetition of the preamble.

In a dependent embodiment of this sub-embodiment, the first field indicates an increment of a quantity of times of repetition of a preamble.

In a dependent embodiment of this sub-embodiment, the increment is a positive integer.

In a dependent embodiment of this sub-embodiment, the increment is a negative integer.

In a dependent embodiment of this sub-embodiment, the increment is 0.

In a dependent embodiment of this sub-embodiment, the first field is not reserved.

In a dependent embodiment of this sub-embodiment, the first field is not an R field.

In a dependent embodiment of this sub-embodiment, the first field occupies 1 bit.

In a dependent embodiment of this sub-embodiment, the first field occupies 2 bits.

In a dependent embodiment of this sub-embodiment, a format of the MAC subheader includes an R field.

In a subordinate embodiment of this dependent embodiment, a format of the MAC subheader includes an E field, a T field, a first field, and an R field.

In a subordinate embodiment of this dependent embodiment, a format of the MAC subheader includes an E field, a T field, a first field, an R field, and a BI field.

In a dependent embodiment of this sub-embodiment, a format of the MAC subheader does not include an R field.

In a subordinate embodiment of this dependent embodiment, a format of the MAC subheader includes an E field, a T field, and a first field.

In a subordinate embodiment of this dependent embodiment, a format of the MAC subheader includes an E field, a T field, a first field, and a BI field.

In a dependent embodiment of this sub-embodiment, a format of the MAC subheader includes a BI field.

In a subordinate embodiment of this dependent embodiment, a format of the MAC subheader includes an E field, a T field, a first field, and a BI field.

In a subordinate embodiment of this dependent embodiment, a format of the MAC subheader includes an E field, a T field, a first field, an R field, and a BI field.

In a subordinate embodiment of this dependent embodiment, the BI field indicates an overload state of a cell.

In a subordinate embodiment of this dependent embodiment, the BI field occupies X1 bits.

In a subordinate embodiment of this dependent embodiment, the BI field is located at the lowest X1 bits of the MAC subheader.

In a subordinate embodiment of this dependent embodiment, the first field is at least one bit located after the T field and before the BI field.

In a dependent embodiment of this sub-embodiment, a format of the MAC subheader does not include a BI field.

In a subordinate embodiment of this dependent embodiment, a format of the MAC subheader includes an E field, a T field, and a first field.

In a subordinate embodiment of this dependent embodiment, a format of the MAC subheader includes an E field, a T field, a first field, and an R field.

In a dependent embodiment of this sub-embodiment, the first field is the 1^{st} bit immediately following the T field.

In a dependent embodiment of this sub-embodiment, the first field is the 2^{nd} bit immediately following the T field.

In a dependent embodiment of this sub-embodiment, the first field is 2 bits immediately following the T field.

In a sub-embodiment of this embodiment, the first candidate RAR set includes the first candidate RAR and the second candidate RAR, and the first candidate RAR set does not include the third candidate RAR.

In a sub-embodiment of this embodiment, the first candidate RAR set includes the first candidate RAR and the third candidate RAR, and the first candidate RAR set does not include the second candidate RAR.

In a dependent embodiment of this sub-embodiment, K1 is a positive integer greater than 1, and is used for determining that the first candidate RAR set does not include the second candidate RAR.

In an embodiment, the "determining K1" includes: determining K1 according to a second RAR.

In a sub-embodiment of this embodiment, the second RAR is received before the first preamble is sent.

In a sub-embodiment of this embodiment, the first field in the second RAR is used for determining K1.

In a sub-embodiment of this embodiment, a format of the second RAR is a format of the third candidate RAR.

In a sub-embodiment of this embodiment, the first node determines K1 according to the first field in the second RAR.

In a sub-embodiment of this embodiment, the first node determines K1 by looking up a table according to the first field in the second RAR.

In an embodiment, any two time-frequency resources in the K1 time-frequency resources do not overlap in time domain.

In an embodiment, any two time-frequency resources in the K1 time-frequency resources are not consecutive in time domain.

In an embodiment, any two time-frequency resources in the K1 time-frequency resources are consecutive in time domain.

In an embodiment, at least two time-frequency resources in the K1 time-frequency resources do not overlap in time domain.

In an embodiment, each of the K1 time-frequency resources includes a time-domain resource and a frequency-domain resource.

In an embodiment, a frequency-domain resource occupied by each of the K1 time-frequency resources is an uplink carrier.

In a sub-embodiment of this embodiment, the carrier is a normal uplink (NUL) carrier.

In a sub-embodiment of this embodiment, the carrier is a supplementary uplink (SUL) carrier.

In an embodiment, a frequency-domain resource occupied by each of the K1 time-frequency resources includes a center frequency.

In an embodiment, a frequency-domain resource occupied by each of the K1 time-frequency resources includes a frequency and a bandwidth.

In an embodiment, any two time-frequency resources in the K1 time-frequency resources overlap in frequency domain.

In an embodiment, any two time-frequency resources in the K1 time-frequency resources do not overlap in frequency domain.

In an embodiment, at least two time-frequency resources of the K1 time-frequency resources overlap in frequency domain.

In an embodiment, at least two time-frequency resources of the K1 time-frequency resources do not overlap in frequency domain.

In an embodiment, any two time-frequency resources in the K1 time-frequency resources occupy a same frequency-domain resource.

In an embodiment, any two time-frequency resources in the K1 time-frequency resources occupy different frequency-domain resources.

In an embodiment, at least two of the K1 time-frequency resources occupy a same frequency-domain resource.

In an embodiment, at least two time-frequency resources of the K1 time-frequency resources occupy different frequency-domain resources.

In an embodiment, each of the K1 time-frequency resources is a PRACH occasion in time domain.

In an embodiment, each of the K1 time-frequency resources is an uplink carrier in frequency domain.

In an embodiment, each of the K1 time-frequency resources is used for sending a preamble.

In an embodiment, each of the K1 time-frequency resources is a PRACH occasion.

In an embodiment, a preamble is sent over each of the K1 time-frequency resources.

In an embodiment, sending a preamble over each of the K1 time-frequency resources is not related to the monitoring for the first signaling in the first time window.

In an embodiment, sending a preamble over each of the K1 time-frequency resources is independent of content of the first RAR.

In an embodiment, a preamble is not sent over at least one time-frequency resource in the K1 time-frequency resources.

In an embodiment, preambles sent over any two time-frequency resources in the K1 time-frequency resources are the same.

In an embodiment, preambles sent over any two time-frequency resources in the K1 time-frequency resources are different.

In an embodiment, a preamble sent over a time-frequency resource in the K1 time-frequency resources is selected by UE.

In an embodiment, a start moment of each time-frequency resource of the K1 time-frequency resources is a start moment of the time-frequency resource in time domain.

In an embodiment, a start moment of each of the K1 time-frequency resources is only related to time domain.

In an embodiment, a start moment of each time-frequency resource of the K1 time-frequency resources is the first symbol used for sending a preamble over the time-frequency resource.

In an embodiment, a cut-off moment of each time-frequency resource of the K1 time-frequency resources is a cut-off moment of the time-frequency resource in time domain.

In an embodiment, a cut-off moment of each of the K1 time-frequency resources is only related to time domain.

In an embodiment, a cut-off moment of each time-frequency resource of the K1 time-frequency resources is the last symbol used for sending a preamble over the time-frequency resource.

In an embodiment, a preamble is a Random Access Preamble.

In an embodiment, a preamble is a sequence.

In an embodiment, a preamble is a ZC sequence.

In an embodiment, a preamble is identified by ra-PreambleIndex.

In an embodiment, a preamble is for a Message 1 (Msg1).

In an embodiment, a meaning of "any two time-frequency resources in the K1 time-frequency resources do not overlap in time domain" includes: before sending of a preamble over one time-frequency resource ends, the other time-frequency resource is not used for sending a preamble.

In an embodiment, a meaning of "any two time-frequency resources in the K1 time-frequency resources do not overlap in time domain" includes: any moment in any time-frequency resource in the K1 time-frequency resources does not belong to any other time-frequency resource in the K1 time-frequency resources.

In an embodiment, the first time-frequency resource is a time-frequency resource having an earliest start moment among the K1 time-frequency resources.

In an embodiment, the first time-frequency resource is a time-frequency resource having an earliest cut-off moment in the K1 time-frequency resources.

In an embodiment, the first moment is related to a first CSS.

In an embodiment, the first moment is related to a first CORESET.

In an embodiment, the first moment is related to a first PDCCH occasion.

In an embodiment, the first moment is the first PDCCH occasion.

In an embodiment, the first moment is related to at least one of the cut-off moment of the first time-frequency resource, the first CSS, or the first CORESET.

In an embodiment, the first moment is related to the cut-off moment of the first time-frequency resource, the first CSS, and the first CORESET.

In an embodiment, the first moment is related to the cut-off moment of the first time-frequency resource and the first PDCCH occasion.

In an embodiment, the first moment is the cut-off moment of the first time-frequency resource.

In an embodiment, the first moment is the first symbol of an earliest CORESET after the cut-off moment of the first time-frequency resource, which is for the first CSS and is used for receiving a PDCCH.

In an embodiment, the first moment is an M1^{th} symbol of the first CORESET, and M1 is greater than 1.

In an embodiment, the first moment is the first symbol of the first CORESET.

In an embodiment, the first PDCCH occasion is the first PDCCH occasion after the cut-off moment of the first time-frequency resource.

In an embodiment, the first PDCCH occasion is related to the first CSS.

In an embodiment, the first PDCCH occasion is related to the first CORESET.

In an embodiment, the first PDCCH occasion is related to the first CSS and the first CORESET.

In an embodiment, the first PDCCH occasion is determined according to a frame structure.

In an embodiment, the first PDCCH occasion is determined according to an RRC configuration.

In an embodiment, the first PDCCH occasion is preconfigured.

In an embodiment, the first PDCCH occasion is predefined.

In an embodiment, the first CSS is a search space to which the first signaling belongs.

In an embodiment, the first CORESET is associated with the first CSS.

In an embodiment, the first CORESET is a CORESET that is for the first CSS and that is used for receiving the PDCCH and that is after the cut-off moment of the first time-frequency resource.

In an embodiment, the first CORESET is an earliest CORESET after the cut-off moment of the first time-frequency resource, which is for the first CSS and is used for receiving a PDCCH.

In an embodiment, the first CORESET is a CORESET to which the first signaling belongs.

In an embodiment, the cut-off moment of the first time-frequency resource is the last symbol of a PRACH occasion corresponding to a PRACH transmission for the first preamble.

In an embodiment, the cut-off moment of the first time-frequency resource is a moment at which transmission of the first preamble ends.

In an embodiment, the first moment is the cut-off moment of the first time-frequency resource or a moment after the cut-off moment of the first time-frequency resource.

In an embodiment, the first moment is the cut-off moment of the first time-frequency resource.

In an embodiment, the first moment is after the cut-off moment of the first time-frequency resource.

In an embodiment, the first moment is before the cut-off moment of the second time-frequency resource.

In an embodiment, the first moment is the first PDCCH occasion after the cut-off moment of the first time-frequency resource.

In an embodiment, the first moment is a P1^{th} symbol after the cut-off moment of the first time-frequency resource.

In an embodiment, the first moment is a P1^{th} slot after the cut-off moment of the first time-frequency resource.

In an embodiment, P1 is predefined.

In an embodiment, P1 is determined according to the first PDCCH occasion after the cut-off moment of the first time-frequency resource.

In an embodiment, P1 is a positive integer.

In an embodiment, P1 is a non-negative integer.

In an embodiment, duration lengths of any two time-frequency resources in the K1 time-frequency resources are equal.

In an embodiment, duration lengths of any two time-frequency resources in the K1 time-frequency resources are unequal.

In an embodiment, duration lengths of at least two time-frequency resources in the K1 time-frequency resources are equal.

In an embodiment, duration lengths of at least two time-frequency resources in the K1 time-frequency resources are unequal.

In an embodiment, "the second time-frequency resource being a latest time-frequency resource in the K1 time-frequency resources" includes: the second time-frequency resource is a time-frequency resource with a latest start moment among the K1 time-frequency resources.

In an embodiment, the "the second time-frequency resource being a latest time-frequency resource in the K1 time-frequency resources" includes: the second time-frequency resource is a time-frequency resource with a latest cut-off moment among the K1 time-frequency resources.

In an embodiment, the first time window is stopped before the expiration moment of the first time window.

In an embodiment, the first time window is not stopped before the expiration moment of the first time window.

In an embodiment, before the cut-off moment of the second time-frequency resource, the first time window is determined as not expired.

In an embodiment, the first time window does not expire before the cut-off moment of the second time-frequency resource.

In an embodiment, the first time window is not restarted within a time interval from the first moment to the expiration moment of the first time window.

In an embodiment, the first time window is restarted within a time interval from the first moment to the expiration moment of the first time window.

In an embodiment, the expiration moment of the first time window is related to K1.

In an embodiment, the expiration moment of the first time window is not related to K1.

In an embodiment, K1 is used for determining the expiration moment of the first time window.

In an embodiment, the expiration moment of the first time window is related to a first time length.

In an embodiment, the expiration moment of the first time window is only related to a first time length.

In an embodiment, the expiration moment of the first time window is related to a first time offset.

In an embodiment, the expiration moment of the first time window is related to an end moment of the second time-frequency resource.

In an embodiment, the expiration moment of the first time window is related to at least one of K1, a first time length, a first time offset, or an end moment of the second time-frequency resource.

In an embodiment, a maximum value of the first time window is the first time length.

In an embodiment, the first time length is used for determining the expiration moment of the first time window.

In an embodiment, a moment later than a moment at which the first time window is started by the first time length is the expiration moment of the first time window.

In an embodiment, a moment later than a moment at which the first time window is restarted by the first time length is the expiration moment of the first time window.

In an embodiment, a moment later than a moment at which the first time window is started or restarted by the first time length is the expiration moment of the first time window.

In an embodiment, an RRC message is used for configuring the first time length.

In an embodiment, an RRC IE is used for configuring the first time length.

In an embodiment, an RRC field is used for configuring the first time length.

In an embodiment, RACH-ConfigCommon is used for configuring the first time length.

In an embodiment, BeamFailureRecoveryConfig is used for configuring the first time length.

In an embodiment, a maximum value of the first time window is a second time length, and the second time length is not equal to the first time length.

In an embodiment, the second time length is used for determining the expiration moment of the first time window.

In an embodiment, a moment later than the first moment by the first time length is the expiration moment of the first time window.

In an embodiment, a moment later than the first moment by the second time length is the expiration moment of the first time window, and the second time length is not equal to the first time length.

In an embodiment, the second time length is related to the first time length, the first time offset, and K1.

In an embodiment, the second time length is equal to (the first time length + the first time offset × K1).

In an embodiment, the second time length is equal to (the first time length + the first time offset × (K1-1)).

In an embodiment, the second time length is related to the first time length and the first time offset.

In an embodiment, the second time length is equal to (the first time length + the first time offset).

In an embodiment, the first time offset is dedicated to PRACH coverage enhancement.

In an embodiment, a unit of the first time offset is the same as a unit of the first time length.

In an embodiment, the first time offset is related to K1.

In an embodiment, the first time offset is related to an end moment of the first time-frequency resource and an end moment of the second time-frequency resource.

In an embodiment, the first time offset is equal to a time interval between the first PDCCH occasion after the end moment of the first time-frequency resource and the first PDCCH occasion after the end moment of the second time-frequency resource.

In an embodiment, the first time offset is related to duration, in time domain, of one of the K1 time-frequency resources.

In an embodiment, the first time offset is equal to duration, in time domain, of one of the K1 time-frequency resources.

In an embodiment, an RRC message is used for configuring the first time offset.

In an embodiment, an RRC IE is used for configuring the first time offset.

In an embodiment, an RRC field is used for configuring the first time offset.

In an embodiment, RACH-ConfigCommon is used for configuring the first time offset.

In an embodiment, BeamFailureRecoveryConfig is used for configuring the first time offset.

### Embodiment 2

Embodiment 2 exemplarily shows a schematic diagram of a network architecture according to an embodiment of this application, as shown in FIG. 2. FIG. 2 shows a network architecture 200 of a 5G New Radio (NR)/Long-Term Evolution (LTE)/Long-Term Evolution Advanced (LTE-A) system. The 5G NR/LTE/LTE-A network architecture 200 may be referred to as a 5G System (5GS)/Evolved Packet System (EPS) 200 or some other suitable term. The 5GS/EPS 200 includes at least one of a user equipment (UE) 201, a radio access network (RAN) 202, a 5G core network (5GC)/evolved packet core (EPC) 210, a home subscriber server (HSS)/unified data management (UDM) 220, and an Internet service 230. The 5GS/EPS may be interconnected to other access networks, but for simplicity, these entities/interfaces are not shown. As shown in the figure, the 5GS/EPS provide a packet-switched service. However, a person skilled in the art may easily understand that various concepts presented throughout this application may be extended to a network providing a circuit-switched service or other cellular networks. The RAN includes a node 203 and another node 204. The node 203 provides user plane and control plane protocol terminations toward the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a transmitter receiver point (TRP), or some other suitable term. The node 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrowband Internet of Things device, a machine type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or some other suitable term. The node 203 is connected to the 5GC/EPC 210 through an S1/NG interface. The 5GC/EPC 210 includes a mobility management entity (MME)/authentication management field (AMF)/session management function (SMF) 211, another MME/AMF/SMF 214, a service gateway (S-GW)/user plane function (UPF) 212, and a packet data network gateway (P-GW)/UPF 213. The MME/AMF/SMF 211 is a control node that processes signaling between the UE 201 and the 5GC/EPC 210. Generally, the MME/AMF/SMF 211 provides bearer and connection management. All user Internet Protocol (IP) packets are transferred through the S-GW/UPF 212, and the S-GW/UPF 212 is connected to the P-GW/UPF 213. The P-GW provides UE IP address assignment and other functions. The P-GW/UPF 213 is connected to the Internet service 230. The Internet service 230 includes an Internet Protocol service corresponding to an operator, and may specifically include the Internet, an intranet, an IP Multimedia Subsystem (IMS), and a packet-switched streaming service.

In an embodiment, the UE 201 corresponds to the first node in this application.

In an embodiment, the UE 201 is a user equipment (UE).

In an embodiment, the UE 201 is a base station (BS).

In an embodiment, the UE 201 is a relay device.

In an embodiment, the node 203 corresponds to the second node in this application.

In an embodiment, the node 203 is a base station.

In an embodiment, the node 203 is a user equipment.

In an embodiment, the node 203 is a relay device.

In an embodiment, the node 203 is a gateway.

Typically, the UE 201 is a user equipment, and the node 203 is base station.

In an embodiment, the user equipment supports transmission in a non-terrestrial network (NTN).

In an embodiment, the user equipment supports transmission in a terrestrial network.

In an embodiment, the user equipment supports transmission in networks with large latency differences.

In an embodiment, the user equipment supports dual connection (DC) transmission.

In an embodiment, the user equipment includes an aircraft.

In an embodiment, the user equipment includes an in-vehicle terminal.

In an embodiment, the user equipment includes a vessel.

In an embodiment, the user equipment includes an Internet of Things terminal.

In an embodiment, the user equipment includes an industrial Internet of Things terminal.

In an embodiment, the user equipment includes a device supporting low-delay high-reliability transmission.

In an embodiment, the user equipment includes a test device.

In an embodiment, the user equipment includes a signaling tester.

In an embodiment, the base station includes a base transceiver station (BTS).

In an embodiment, the base station includes a NodeB (NB).

In an embodiment, the base station includes a gNB.

In an embodiment, the base station includes an eNB.

In an embodiment, the base station includes an ng-eNB.

In an embodiment, the base station includes an en-gNB.

In an embodiment, the base station supports transmission in a non-terrestrial network.

In an embodiment, the base station supports transmission in networks with large latency differences.

In an embodiment, the base station supports transmission in a terrestrial network.

In an embodiment, the base station includes a marco cellular base station.

In an embodiment, the base station includes a micro cell base station.

In an embodiment, the base station includes a pico cell base station.

In an embodiment, the base station includes a home base station (Femtocell).

In an embodiment, the base station includes a base station supporting large latency differences.

In an embodiment, the base station includes a flight platform device.

In an embodiment, the base station includes a satellite device.

In an embodiment, the base station includes a transmit receiver point (TRP).

In an embodiment, the base station includes a centralized unit (CU).

In an embodiment, the base station includes a distributed unit (DU).

In an embodiment, the base station includes a test device.

In an embodiment, the base station includes a signaling tester.

In an embodiment, the base station includes an integrated access and backhaul (IAB)-node.

In an embodiment, the base station includes an IAB-donor.

In an embodiment, the base station includes an IAB-donor-CU.

In an embodiment, the base station includes an IAB-donor-DU.

In an embodiment, the base station includes an IAB-DU.

In an embodiment, the base station includes an IAB-MT.

In an embodiment, the relay device includes a relay.

In an embodiment, the relay device includes an L3 relay.

In an embodiment, the relay device includes an L2 relay.

In an embodiment, the relay device includes a router.

In an embodiment, the relay device includes a switch.

In an embodiment, the relay device includes a user equipment.

In an embodiment, the relay device includes a base station.

### Embodiment 3

Embodiment 3 shows a schematic diagram of an embodiment of a radio protocol architecture for a user plane and a radio protocol architecture for a control plane according to this application, as shown in FIG. 3. FIG. 3 is a schematic diagram illustrating an embodiment of a radio protocol architecture for a user plane 350 and a radio protocol architecture for a control plane 300. In FIG. 3, the radio protocol architecture used for the control plane 300 is presented using three layers: Layer 1, Layer 2, and Layer 3. Layer 1 (L1) is the lowest layer and implements various physical layer (PHY) signal processing functions. The L1 is referred to as PHY 301 in this specification. Layer 2 (L2) 305 is built on top of the PHY 301, and includes a Medium Access Control (MAC) sublayer 302, a Radio Link Control (RLC) sublayer 303, and a Packet Data Convergence Protocol (PDCP) sublayer 304. The PDCP sublayer 304 provides multiplexing between different radio bearers and logical channels. The PDCP sublayer 304 further provides security by encrypting a data packet, and provides support for handover. The RLC sublayer 303 provides segmentation and reassembly of a higher-layer data packet, retransmission of a lost data packet, and reordering of a data packet, to compensate for out-of-order reception caused by Hybrid Automatic Repeat Request (HEVC). The MAC sublayer 302 provides multiplexing between a logical channel and a transport channel. The MAC sublayer 302 is also responsible for allocating various radio resources (for example, resource blocks) in a cell. The MAC sublayer 302 is also responsible for HARQ operations. The RRC sublayer 306 in the L3 of the control plane 300 is responsible for obtaining a radio resource (i.e., a radio bearer) and configuring a lower layer by using RRC signaling. The radio protocol architecture for the user plane 350 includes Layer 1 (L1) and Layer 2 (L2). A physical layer 351, a PDCP sublayer 354 in L2 355, an RLC sublayer 353 in L2 355, and a MAC sublayer 352 in L2 355 in the radio protocol architecture for the user plane 350 are substantially the same as corresponding layers and sublayers in the radio protocol architecture for the control plane 300, except that the PDCP sublayer 354 further provides header compression for a higher-layer data packet to reduce radio transmission overheads. The L2 355 in the user plane 350 further includes a Service Data Adaptation Protocol (SDAP) sublayer 356. The SDAP sublayer 356 is responsible for mapping between a QoS flow and a Data Radio Bearer (DRB), to support diversity of services.

In an embodiment, the radio protocol architecture in FIG. 3 is applicable to the first node in this application.

In an embodiment, the radio protocol architecture in FIG. 3 is applicable to the second node in this application.

In an embodiment, the first preamble in this application is generated by the PHY 301 or the PHY 351.

In an embodiment, the second preamble in this application is generated by the PHY 301 or the PHY 351.

In an embodiment, the first signaling in this application is generated by the PHY 301 or the PHY 351.

In an embodiment, the first RAR in this application is generated by the RRC 306.

In an embodiment, the first RAR in this application is generated by the MAC 302 or the MAC 352.

In an embodiment, the first RAR in this application is generated by the PHY 301 or the PHY 351.

In an embodiment, the third message in this application is generated by the RRC 306.

In an embodiment, the third message in this application is generated by the MAC 302 or the MAC 352.

In an embodiment, the third message in this application is generated by the PHY 301 or the PHY 351.

### Embodiment 4

Embodiment 4 shows a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

In a transmission from the second communication device 410 to the first communication device 450, at the second communication device 410, a higher-layer data packet from the core network is provided to the controller/processor 475. The controller/processor 475 implements a function of the L2. In a transmission from the second communication device 410 to the first communication device 450, the controller/processor 475 provides header compression, encryption, packet segmentation and reordering, multiplexing between logical and transport channels, and radio resource allocation for the first communication device 450 based on various priority measures. The controller/processor 475 is also responsible for retransmission of a lost packet, and signaling to the first communication device 450. The transmit processor 416 and the multi-antenna transmit processor 471 implement various signal processing functions of the L1 (i.e., the physical layer). The transmit processor 416 implements coding and interleaving to promote forward error correction (FEC) at the second communication device 410, and mapping of a signal cluster based on various modulation schemes (for example, binary phase shift keying (BPK), orthogonal phase shift keying (QPK), M-phase shift keying (M-PK), and M-orthogonal amplitude modulation (M-QAM)). The multi-antenna transmit processor 471 performs digital spatial precoding, including codebook-based precoding and non-codebook-based precoding, and beam forming processing on encoded and modulated symbols, to generate one or more spatial streams. Then, the transmit processor 416 maps each spatial stream to a subcarrier, multiplexes the spatial stream with a reference signal (for example, a pilot) in time domain and/or frequency domain, and then uses an inverse fast Fourier transform (IFFT) to generate a physical channel carrying time-domain multi-carrier symbol stream. Then, the multi-antenna transmit processor 471 performs a transmission analog precoding/beamforming operation on the time-domain multi-carrier symbol stream. Each transmitter 418 converts a baseband multi-carrier symbol stream provided by the multi-antenna transmit processor 471 into a radio frequency stream, and then provides the radio frequency stream to different antennas 420.

In a transmission from the second communication device 410 to the first communication device 450, at the first communication device 450, each receiver 454 receives a signal through a corresponding antenna 452. Each receiver 454 recovers information modulated onto a radio frequency carrier, converts the radio frequency stream into a baseband multi-carrier symbol stream, and provides the baseband multi-carrier symbol stream to the receive processor 456. The receive processor 456 and the multi-antenna receive processor 458 implement various signal processing functions of the L1. The multi-antenna receive processor 458 performs a reception analog precoding/beamforming operation on the baseband multi-carrier symbol stream from the receiver 454. The receive processor 456 converts, from time domain to frequency domain by using a fast Fourier transform (FFT), the baseband multi-carrier symbol stream having been subjected to the reception analog precoding/beamforming operation. In frequency domain, a data signal and a reference signal from the physical layer are demultiplexed by the receive processor 456, where the reference signal is used for channel estimation, and the data signal is subjected to multi-antenna detection in the multi-antenna receive processor 458 to recover any spatial stream whose destination is the first communication device 450. Symbols on each spatial stream are demodulated and recovered in the receive processor 456 to generate a soft decision. Then, the receive processor 456 decodes and deinterleaves the soft decision to recover higher-layer data and a control signal transmitted on the physical channel by the second communication device 410. Then, the higher-layer data and the control signal are provided to the controller/processor 459. The controller/processor 459 implements a function of the L2. The controller/processor 459 may be associated with the memory 460 that stores program code and data. The memory 460 may be referred to as a computer readable medium. In a transmission from the second communication device 410 to the second communication device 450, the controller/processor 459 provides demultiplexing between transport and logical channels, packet reassembly, decryption, header decompression, and control signal processing to recover a higher-layer data packet from the core network. Then, the higher-layer data packet is provided to all protocol layers above the L2. Various control signals may also be provided to L3 for L3 processing.

In a transmission from the first communication device 450 to the second communication device 410, at the first communication device 450, a higher-layer data packet is provided to the controller/processor 459 through the data source 467. The data source 467 represents all protocol layers above the L2. Similar to a sending function of the second communication device 410 described in the transmission from the second communication device 410 to the first communication device 450, the controller/processor 459 implements header compression, encryption, packet segmentation and reordering, and multiplexing between logical and transport channels based on radio resources allocation, so as to implement L2 functions for the user plane and the control plane. The controller/processor 459 is also responsible for retransmission of a lost packet, and signaling to the second communication device 410. The transmit processor 468 performs modulation mapping and channel coding. The multi-antenna transmit processor 457 performs digital multi-antenna spatial precoding, including codebook-based precoding and non-codebook-based precoding, and beamforming. Then, the transmit processor 468 modulates the generated spatial stream into a multi-carrier/single-carrier symbol stream. The multi-carrier/single-carrier symbol stream is subjected to an analog precoding/beamforming operation in the multi-antenna transmit processor 457, and then provided to different antennas 452 through the transmitter 454. Each transmitter 454 first converts a baseband symbol stream provided by the multi-antenna transmit processor 457 into a radio frequency symbol stream, and then provides the radio frequency symbol stream to the antenna 452.

A function of the second communication device 410 in a transmission from the first communication device 450 to the second communication device 410 is similar to the receiving function of the first communication device 450 described in the transmission from the second communication device 410 to the first communication device 450. Each receiver 418 receives a radio frequency signal through a corresponding antenna 420, converts the received radio frequency signal into a baseband signal, and provides the baseband signal to the multi-antenna receive processor 472 and the receive processor 470. The receive processor 470 and the multi-antenna receive processor 472 jointly implement functions of the L1. The controller/processor 475 implements an L2 function. The controller/processor 475 may be associated with the memory 476 that stores program code and data. The memory 476 may be referred to as a computer readable medium. In a transmission from the first communication device 450 to the second communication device 410, the controller/processor 475 provides demultiplexing between transport and logical channels, packet reassembly, decryption, header decompression, and control signal processing to recover a higher-layer data packet from the UE 450. The higher-layer data packet from the controller/processor 475 may be provided to the core network.

In an embodiment, the first communication device 450 includes at least one processor and at least one memory. The at least one memory includes computer program code. The at least one memory and the computer program code are configured to be used in combination with the at least one processor. The first communication device 450 at least determines K1, where K1 is a positive integer greater than 1; starts a first time window at a first moment; monitors a first signaling in the first time window, where the first signaling is used for scheduling a random access response; and sends a first preamble over at least a first time-frequency resource in K1 time-frequency resources, where the first time-frequency resource is an earliest time-frequency resource in the K1 time-frequency resources. The first moment is related to at least a cut-off moment of the first time-frequency resource. The first moment is not earlier than a cut-off moment of the first time-frequency resource and is earlier than a cut-off moment of a second time-frequency resource, the second time-frequency resource being a latest time-frequency resource in the K1 time-frequency resources. An expiration moment of the first time window is later than the cut-off moment of the second time-frequency resource.

In an embodiment, the first communication device 450 includes a memory storing a computer-readable instruction program. The computer-readable instruction program generates an action when executed by at least one processor. The action includes: determining K1, where K1 is a positive integer greater than 1; starting a first time window at a first moment; monitoring a first signaling in the first time window, where the first signaling is used for scheduling a random access response; and sending a first preamble over at least a first time-frequency resource in K1 time-frequency resources, where the first time-frequency resource is an earliest time-frequency resource in the K1 time-frequency resources. The first moment is related to at least a cut-off moment of the first time-frequency resource. The first moment is not earlier than a cut-off moment of the first time-frequency resource and is earlier than a cut-off moment of a second time-frequency resource, the second time-frequency resource being a latest time-frequency resource in the K1 time-frequency resources. An expiration moment of the first time window is later than the cut-off moment of the second time-frequency resource.

In an embodiment, the second communication device 410 includes at least one processor and at least one memory. The at least one memory includes computer program code. The at least one memory and the computer program code are configured to be used in combination with the at least one processor. The second communication device 410 at least receives a first preamble, where K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, the second communication device 410 includes a memory storing a computer-readable instruction program. The computer-readable instruction program generates an action when executed by at least one processor. The action includes: receiving a first preamble, where K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

In an embodiment, at least one of the antenna 452, the receiver 454, the receive processor 456, and the controller/processor 459 is configured to receive a first signaling.

In an embodiment, at least one of the antenna 420, the transmitter 418, the transmit processor 416, and the controller/processor 475 is configured to send a first signaling.

In an embodiment, at least one of the antenna 452, the receiver 454, the receive processor 456, and the controller/processor 459 is configured to receive a first RAR.

In an embodiment, at least one of the antenna 420, the transmitter 418, the transmit processor 416, and the controller/processor 475 is configured to send a first RAR.

In an embodiment, at least one of the antenna 452, the transmitter 454, the transmit processor 468, and the controller/processor 459 is configured to send a first preamble.

In an embodiment, at least one of the antenna 420, the receiver 418, the receive processor 470, and the controller/processor 475 is configured to receive a first preamble.

In an embodiment, at least one of the antenna 452, the transmitter 454, the transmit processor 468, and the controller/processor 459 is configured to send a second preamble.

In an embodiment, at least one of the antenna 420, the receiver 418, the receive processor 470, and the controller/processor 475 is configured to receive a second preamble.

In an embodiment, at least one of the antenna 452, the transmitter 454, the transmit processor 468, and the controller/processor 459 is configured to send a third message.

In an embodiment, at least one of the antenna 420, the receiver 418, the receive processor 470, and the controller/processor 475 is configured to receive a third message.

In an embodiment, the first communication device 450 corresponds to the first node in this application.

In an embodiment, the first communication device 450 is a user equipment.

In an embodiment, the first communication device 450 is a base station (gNB/eNB/ng-eNB).

In an embodiment, the first communication device 450 is a relay device.

In an embodiment, the second communication device 410 corresponds to the second node in this application.

In an embodiment, the second communication device 410 is a user equipment.

In an embodiment, the second communication device 410 is a base station (gNB/eNB/ng-eNB).

In an embodiment, the second communication device 410 is a relay device.

### Embodiment 5

Embodiment 5 exemplarily shows a flowchart of transmission of a radio signal according to an embodiment of this application, as shown in FIG. 5. It should be particularly noted that the order in this embodiment does not constitute a limitation on the orders of signal transmissions and implementations in this application.

For **First node U01:** Step S5101: Determine K1, where K1 is a positive integer greater than 1. Step S5102: Send a first preamble over at least a first time-frequency resource in K1 time-frequency resources. Step S5103: Start a first time window at a first moment. Step S5104: Monitor a first signaling in the first time window, where the first signaling is used for scheduling a random access response. Step S5105: Receive the first signaling. Step S5106: Receive a first RAR according to scheduling by the first signaling. Step S5107: Determine that the first time window expires.

**For Second node N02:** Step S5201: Receive a first preamble. Step S5202: Send the first signaling. Step S5203: Send the first RAR.

In Embodiment 5, any two time-frequency resources in the K1 time-frequency resources do not overlap in time domain, and the first time-frequency resource is an earliest time-frequency resource in the K1 time-frequency resources; the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

In an embodiment, the first node U01 is a user equipment.

In an embodiment, the first node U01 is a base station.

In an embodiment, the first node U01 is a relay device.

In an embodiment, the second node N02 is a base station.

In an embodiment, the second node N02 is a user equipment.

In an embodiment, the second node N02 is a relay device.

In an embodiment, the first node U01 is a user equipment, and the second node N02 is a base station.

In an embodiment, the first node U01 is a user equipment, and the second node N02 is a relay device.

In an embodiment, the first node U01 is a user equipment, and the second node N02 is a user equipment.

In an embodiment, the first node U01 is a base station, and the second node N02 is a base station.

In an embodiment, the first node N01 is a relay device, and the second node N02 is a base station.

In an embodiment, the first node U01 and the second node N02 are connected to each other through a uu interface.

In an embodiment, the first node U01 and the second node N02 are connected to each other through an Xn interface.

In an embodiment, the first node U01 and the second node N02 are connected to each other through an X2 interface.

In an embodiment, the first node U01 and the second node N02 are connected to each other through a PC5 interface.

In an embodiment, the first node U01 and the second node N02 are connected to each other through an air interface.

In an embodiment, the first time window is running when the first signaling is received.

In an embodiment, the first signaling is received during running of the first time window.

In an embodiment, the first time window does not expire within a time interval from the first moment to a moment at which the first signaling is received.

In an embodiment, the first time window does not reach 0 within a time interval from the first moment to a moment at which the first signaling is received, where the first time window is counted down.

In an embodiment, the first time window does not reach a maximum value of the first time window within a time interval from the first moment to a moment at which the first signaling is received, where the first time window is counted up.

In an embodiment, the first RAR is received according to scheduling information of the first signaling.

In an embodiment, the first RAR is scheduled by the first signaling.

In an embodiment, the first RAR is a random access response.

In an embodiment, the first RAR is a Random Access Response.

In an embodiment, the first RAR is a MAC layer signaling.

In an embodiment, the first RAR is the first candidate RAR.

In an embodiment, a format of the first RAR is the same as a format of the first candidate RAR.

In an embodiment, the first RAR is the second candidate RAR.

In an embodiment, a format of the first RAR is the same as a format of the second candidate RAR.

In an embodiment, the first RAR is the third candidate RAR.

In an embodiment, a format of the first RAR is the same as a format of the third candidate RAR.

In an embodiment, the first RAR is a candidate RAR in the first candidate RAR set.

In an embodiment, a format of the first RAR is the same as a format of a candidate RAR in the first candidate RAR set.

In an embodiment, the first RAR is the first candidate RAR, the first RAR includes a RAPID field, and a Random Access Preamble identifier in the RAPID field matches an identifier of a preamble sent over at least one time-frequency resource of the K1 time-frequency resources.

In a sub-embodiment of this embodiment, that the Random Access Preamble identifier in the RAPID field matches an identifier of a preamble sent over at least one time-frequency resource of the K1 time-frequency resources is used to determine that the first RAR is a response for a preamble sent over the K1 time-frequency resources.

In a sub-embodiment of this embodiment, the Random Access Preamble identifier in the RAPID field matches an identifier of a preamble sent over one of the K1 time-frequency resources.

In a sub-embodiment of this embodiment, the Random Access Preamble identifier in the RAPID field matches an identifier of a preamble sent over each of the K1 time-frequency resources.

In a sub-embodiment of this embodiment, the Random Access Preamble identifier in the RAPID field matches an identifier of a preamble sent over any time-frequency resource in the K1 time-frequency resources.

In a sub-embodiment of this embodiment, the Random Access Preamble identifier in the RAPID field matches an identifier of a preamble sent over the first time-frequency resource.

In a sub-embodiment of this embodiment, the identifier of the preamble is ra-PreambleIndex.

In a sub-embodiment of this embodiment, the identifier of the preamble is PREAMBLE_INDEX.

In a sub embodiment of this embodiment, the identifier of the preamble is used for indicating the preamble.

In a sub-embodiment of this embodiment, identifiers of preambles sent over at least one time-frequency resource in the K1 time-frequency resources are equal.

In a sub-embodiment of this embodiment, identifiers of preambles sent over at least one of the K1 time-frequency resources are each unique.

In a sub-embodiment of this embodiment, at least two of identifiers of preambles sent over at least one time-frequency resource in the K1 time-frequency resources are equal.

In a sub-embodiment of this embodiment, at least two of identifiers of preambles sent over at least one time-frequency resource in the K1 time-frequency resources are each unique.

In a sub-embodiment of this embodiment, the matching means being the same.

In a sub-embodiment of this embodiment, the matching means being equal.

In a sub-embodiment of this embodiment, the matching means being related.

In a sub-embodiment of this embodiment, the matching means corresponding.

In an embodiment, that the first RAR is the first candidate RAR includes: the first RAR includes a RAPID field, and a Random Access Preamble identifier in the RAPID field matches an identifier of a preamble sent over at least one time-frequency resource of the K1 time-frequency resources.

In an embodiment, the first RAR is the first candidate RAR, the first RAR includes a RAPID field, and a Random Access Preamble identifier in the RAPID field does not match an identifier of a preamble sent over at least one time-frequency resource of the K1 time-frequency resources.

In a sub-embodiment of this embodiment, that the Random Access Preamble identifier in the RAPID field does not match a PREAMBLE_INDEX of a preamble sent over at least one time-frequency resource of the K1 time-frequency resources is used to determine that the first RAR is not a response for a preamble sent over the K1 time-frequency resources.

In a sub-embodiment of this embodiment, the Random Access Preamble identifier in the RAPID field does not match a PREAMBLE_INDEX of a preamble sent over one of the K1 time-frequency resources.

In a sub-embodiment of this embodiment, the Random Access Preamble identifier in the RAPID field does not match a PREAMBLE_INDEX of a preamble sent over each of the K1 time-frequency resources.

In a sub-embodiment of this embodiment, the Random Access preamble identifier in the RAPID field does not match PREAMBLE_INDEX of a preamble sent over any time-frequency resource in the K1 time-frequency resources.

In a sub-embodiment of this embodiment, the Random Access Preamble identifier in the RAPID field does not match a PREAMBLE_INDEX of a preamble sent over the first time-frequency resource.

In an embodiment, the first RAR is the second candidate RAR, and the first RAR includes a Backoff Indicator field.

In an embodiment, that the first RAR is the second candidate RAR includes: the first RAR includes a Backoff Indicator field.

In an embodiment, that the first RAR is the second candidate RAR is used to determine that the first RAR includes a Backoff Indicator field.

In an embodiment, the first RAR is the third candidate RAR, and the first RAR includes the first field.

In an embodiment, that the first RAR is the third candidate RAR includes: the first RAR includes the first field.

In an embodiment, that the first RAR is the third candidate RAR is used to determine that the first RAR includes the first field.

In an embodiment, as a response to the reception of the first RAR, if the first RAR includes a RAPID field and a Random Access Preamble identifier in the RAPID field does not match an identifier of a preamble sent over at least one time-frequency resource of the K1 time-frequency resources, it is determined that the random access response has been successfully received.

In an embodiment, as a response to the reception of the first RAR, only when the first RAR includes a RAPID field and a Random Access Preamble identifier in the RAPID field does not match an identifier of a preamble sent over at least one time-frequency resource of the K1 time-frequency resources, it is determined that the random access response has been successfully received.

In an embodiment, as a response to the reception of the first RAR, if the first RAR includes a RAPID field and a Random Access Preamble identifier in the RAPID field does not match a PREAMBLE_INDEX of a preamble sent over at least one time-frequency resource of the K1 time-frequency resources, it is determined that the random access response has not been successfully received.

In an embodiment, as a response to the reception of the first RAR, if the first RAR is the second candidate RAR, it is determined that the random access response has not been successfully received.

In an embodiment, as a response to the reception of the first RAR, if the first RAR is the third candidate RAR, it is determined that the random access response has not been successfully received.

In an embodiment, as a response to determining that the random access response has been successfully received, the first time window is stopped.

In an embodiment, as a response to determining that the random access response has been successfully received, the first time window may be stopped.

In an embodiment, as a response to determining that the random access response has been successfully received, the first time window may not be stopped.

In an embodiment, if the first time window is stopped, the monitoring of the first signaling is stopped.

In an embodiment, if the first time window is stopped, the monitoring for the first signaling is stopped.

In an embodiment, if the first time window is stopped, the monitoring of the random access response is stopped.

In an embodiment, the dashed-line block F5.1 is optional.

In an embodiment, the dashed-line block F5.1 exists.

In an embodiment, the dashed-line block F5.1 does not exist.

In an embodiment, step S5107 is optional.

In an embodiment, step S5107 exists.

In an embodiment, step S5107 does not exist.

In an embodiment, the dashed-line block F5.1 exists, and step S5107 does not exist.

In a sub-embodiment of this embodiment, the first time window is stopped before the first time window expires.

In an embodiment, the dashed-line block F5.1 does not exist, and step S5107 exists.

In an embodiment, the dashed-line block F5.1 and step S5107 both exist.

In an embodiment, step S5103 is performed before step S5104.

In an embodiment, step S5103 is performed after step S5104.

### Embodiment 6

Embodiment 6 exemplarily shows a flowchart of transmission of a radio signal according to another embodiment of this application, as shown in FIG. 6. It should be particularly noted that the order in this embodiment does not constitute a limitation on the orders of signal transmissions and implementations in this application.

For **First node U01:** Step S6101: Receive a first RAR. Step S6102: Send a third message as a response to the first RAR being successfully received in the first time window.

For **Second node N02:** Step S6201: Receive the third message.

In Embodiment 6, the K1 time-frequency resources are respectively associated with at least two downlink RS resources, the third message is associated with a target downlink RS resource, and the target downlink RS resource is one of the at least two downlink RS resources; and a CORESET or search space to which the first signaling belongs is used for determining the target downlink RS resource.

In an embodiment, the first RAR is the first candidate RAR.

In an embodiment, a format of the first RAR is the same as a format of the first candidate RAR.

In an embodiment, a MAC subheader of the first RAR includes a RAPID field, and a Random Access Preamble identifier in the RAPID field does not match an identifier of a preamble sent over at least one time-frequency resource of the K1 time-frequency resources.

In an embodiment, the third message is sent, as a response to that the first RAR has been successfully received in the first time window, that the first RAR includes a RAPID field, and that a Random Access Preamble identifier in the RAPID field matches an identifier of a preamble sent over at least one time-frequency resource of the K1 time-frequency resources.

In an embodiment, a MAC RAR in the first RAR indicates a second RNTI.

In an embodiment, a temporary C-RNTI field in the MAC RAR in the first RAR indicates the second RNTI.

In an embodiment, the second RNTI is a temporary identity used for random access.

In an embodiment, the second RNTI is a TC-RNTI.

In an embodiment, the second RNTI is a temporary C-RNTI.

In an embodiment, a Timing Advanced Command field in the MAC RAR in the first RAR indicates T_{A}.

In an embodiment, a UL Grant field in the MAC RAR in the first RAR indicates an uplink resource.

In an embodiment, the third message is Msg3.

In an embodiment, the third message is sent over a PUSCH.

In an embodiment, the third message is scrambled by the second RNTI.

In an embodiment, the third message is sent over an uplink resource indicated by the first RAR.

In an embodiment, a moment at which the third message is sent is related to T_{A} indicated by the first RAR.

In an embodiment, the third message includes a C-RNTI of the first node U01.

In an embodiment, the third message includes one C-RNTI MAC CE, and the C-RNTI MAC CE includes the C-RNTI of the first node U01.

In an embodiment, the third message includes one common control channel (CCCH) service data unit (SDU), and the CCCH SDU includes an I-RNTI of the first node U01.

In an embodiment, the third message is sent according to the target downlink RS resource.

In an embodiment, the third message is sent according to a space parameter of the target downlink RS resource.

In an embodiment, the K1 time-frequency resources are respectively associated with at least two downlink RS resources.

In an embodiment, the K1 time-frequency resources are respectively associated with K1 downlink RS resources.

In an embodiment, the at least two downlink RS resources are K1 downlink RS resources.

In an embodiment, the at least two downlink RS resources are no more than K1 downlink RS resources.

In an embodiment, each of the at least two downlink RS resources is an SSB.

In an embodiment, each of the at least two downlink RS resources is a CSI-RS.

In an embodiment, each of the at least two downlink RS resources is one of an SSB or a CSI-RS.

In an embodiment, the CORESET to which the first signaling belongs is associated with an index of a CORESET.

In an embodiment, the CORESET to which the first signaling belongs is the first CORESET.

In an embodiment, the CORESET to which the first signaling belongs includes the first CORESET.

In an embodiment, the CORESET to which the first signaling belongs includes the second CORESET.

In an embodiment, the CORESET to which the first signaling belongs includes at least one CORESET.

In an embodiment, the CORESET to which the first signaling belongs is associated with the first CSS.

In an embodiment, the CORESET to which the first signaling belongs is associated with the second CSS.

In an embodiment, the search space to which the first signaling belongs is an index of a search space.

In an embodiment, the search space to which the first signaling belongs is the first CSS.

In an embodiment, the search space to which the first signaling belongs includes the first CSS.

In an embodiment, the search space to which the first signaling belongs includes the second CSS.

In an embodiment, the search space to which the first signaling belongs includes at least one CSS.

In an embodiment, the search space to which the first signaling belongs includes at least one search space.

In an embodiment, at least one of the CORESET or the search space to which the first signaling belongs is used for determining the target downlink RS resource.

In an embodiment, a downlink RS resource associated with the CORESET or the search space to which the first signaling belongs is the target downlink RS resource.

In an embodiment, a space parameter used for receiving the first signaling is quasi co-located (QCL-ed) with the target downlink RS resource.

In an embodiment, a space parameter used for receiving the first signaling is the same as the space parameter of the target downlink RS resource.

In an embodiment, a space parameter of the target downlink RS resource is determined according to a space parameter of the first signaling.

In an embodiment, a space parameter of the target downlink RS resource is determined according to a space parameter of the first signaling, and the space parameter of the first signaling includes at least one of the CORESET or the search space to which the first signaling belongs.

In an embodiment, the space parameter includes a CORESET.

In an embodiment, the space parameter includes a search space.

In an embodiment, the space parameter includes a QCL type.

In an embodiment, the space parameter includes a transmit beam.

In an embodiment, the space parameter includes a receive beam.

### Embodiment 7

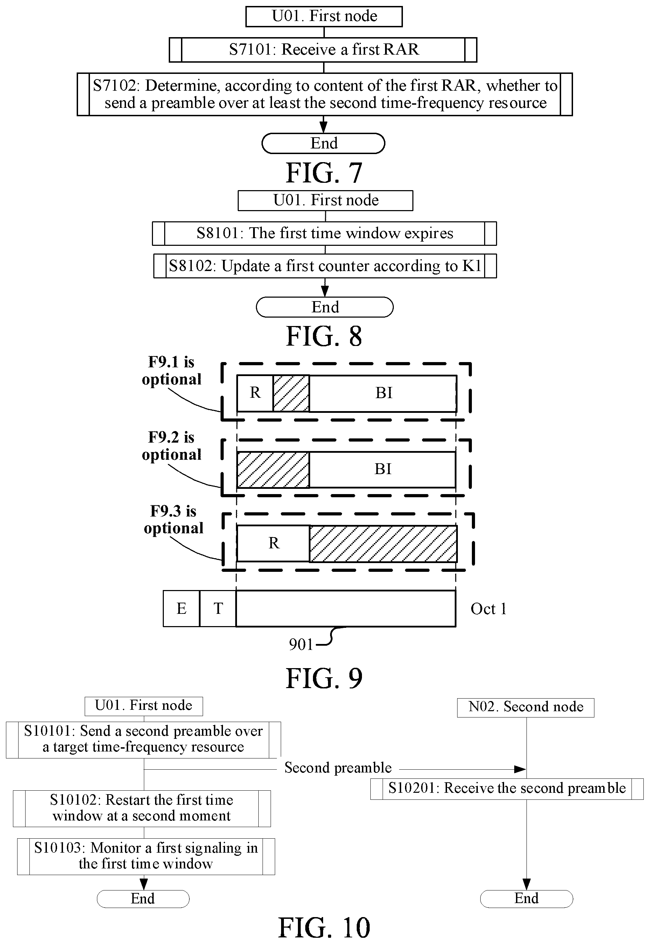

Embodiment 7 exemplarily shows a flowchart of transmission of a radio signal according to still another embodiment of this application, as shown in FIG. 7. It should be particularly noted that the order in this embodiment does not constitute a limitation on the orders of signal transmissions and implementations in this application.

For **First node U01:** Step S7101: Receive a first RAR. Step S7102: Determine, according to content of the first RAR, whether to send a preamble over at least the second time-frequency resource.

In an embodiment, before the first RAR is received, the first signaling is received.

In an embodiment, whether to send a preamble over at least the second time-frequency resource is related to the content of the first RAR.

In an embodiment, it is determined according to the content of the first RAR whether to send a preamble over any time-frequency resource whose start moment is later than the moment at which the first RAR is received among the K1 time-frequency resources.

In an embodiment, it is determined according to the content of the first RAR whether to send a preamble over each time-frequency resource whose start moment is later than the moment at which the first RAR is received among the K1 time-frequency resources.

In an embodiment, it is determined according to the content of the first RAR whether to send a preamble over the first time-frequency resource whose start moment is later than the moment at which the first RAR is received among the K1 time-frequency resources.

In an embodiment, the MAC subheader of the first RAR is used for determining the content of the first RAR.

In an embodiment, a format of the first RAR is used for determining the content of the first RAR.

In an embodiment, the first RAR indicates whether to send a preamble over at least the second time-frequency resource.

In an embodiment, the first RAR explicitly indicates whether to send a preamble over at least the second time-frequency resource.

In an embodiment, the first RAR implicitly indicates whether to send a preamble over at least the second time-frequency resource.

In an embodiment, if the first RAR is the first candidate RAR, no preamble is sent over at least the second time-frequency resource.

In an embodiment, if the first RAR includes a RAPID field and a Random Access Preamble identifier in the RAPID field does not match an identifier of a preamble sent over at least one time-frequency resource of the K1 time-frequency resources, no preamble is sent over at least the second time-frequency resource.

In an embodiment, if the first RAR includes a RAPID field and a Random Access Preamble identifier in the RAPID field matches an identifier of a preamble sent over at least one time-frequency resource of the K1 time-frequency resources, no preamble is sent over any time-frequency resource whose start moment is later than the moment at which the first RAR is received among the K1 time-frequency resources.

In an embodiment, at a start moment of each of the K1 time-frequency resources, a preamble is sent as long as a first candidate RAR that includes a RAPID field including a Random Access Preamble identifier that matches an identifier of a preamble sent over at least one time-frequency resource in the K1 time-frequency resources has not been received in the first time window.

In an embodiment, at a start moment of each of the K1 time-frequency resources, a preamble is sent as long as the first time window is running.

In an embodiment, if the first RAR is the second candidate RAR and the Backoff Indicator field is greater than a threshold, no preamble is sent over at least the second time-frequency resource.

In an embodiment, if the first RAR is the second candidate RAR and the Backoff Indicator field is greater than a threshold, no preamble is sent over any time-frequency resource whose start moment is later than the moment at which the first RAR is received among the K1 time-frequency resources.

In an embodiment, if the first RAR is the third candidate RAR and the first field indicates to reduce a quantity of times of repetition of the preamble, no preamble is sent over at least the second time-frequency resource.

In an embodiment, if the first RAR is the third candidate RAR and the first field indicates to reduce a quantity of times of repetition of the preamble, no preamble is sent over any time-frequency resource whose start moment is later than the moment at which the first RAR is received among the K1 time-frequency resources.

In an embodiment, if the first RAR is the third candidate RAR and the first field indicates not to send a preamble over at least the second time-frequency resource, no preamble is sent over at least the second time-frequency resource.

In an embodiment, if the first RAR is the third candidate RAR and the first field indicates not to send a preamble over any time-frequency resource whose start moment is later than the moment at which the first RAR is received among the K1 time-frequency resources, no preamble is sent over any time-frequency resource whose start moment is later than the moment at which the first RAR is received among the K1 time-frequency resources.

In an embodiment, if the first RAR is the second candidate RAR, a preamble is sent over at least the second time-frequency resource.

In an embodiment, if the first RAR is the third candidate RAR, a preamble is sent over at least the second time-frequency resource.

In an embodiment, if the first RAR is the second candidate RAR and the Backoff Indicator field is not greater than a threshold, a preamble is sent over at least the second time-frequency resource.

In an embodiment, if the first RAR is the third candidate RAR and the first field does not indicate to reduce a quantity of times of repetition of the preamble, a preamble is sent over at least the second time-frequency resource.

In an embodiment, if the first RAR is the third candidate RAR and the first field does not indicate not to send a preamble over at least the second time-frequency resource, a preamble is sent over at least the second time-frequency resource.

In an embodiment, at a start moment of each of the K1 time-frequency resources, a preamble is sent as long as a first candidate RAR that includes a RAPID field including a Random Access Preamble identifier that matches an identifier of a preamble sent over at least one time-frequency resource in the K1 time-frequency resources has not been received in the first time window and a second candidate RAR including a Backoff Indicator field greater than a threshold has not been received in the first time window.

In an embodiment, at a start moment of each of the K1 time-frequency resources, a preamble is sent as long as a first candidate RAR that includes a RAPID field including a Random Access Preamble identifier that matches an identifier of a preamble sent over at least one time-frequency resource in the K1 time-frequency resources has not been received in the first time window and a third candidate RAR including a first field indicating to reduce a quantity of times of repetition of a preamble has not been received in the first time window.

In an embodiment, at a start moment of each of the K1 time-frequency resources, a preamble is sent as long as a first candidate RAR that includes a RAPID field including a Random Access Preamble identifier that matches an identifier of a preamble sent over at least one time-frequency resource in the K1 time-frequency resources has not been received in the first time window and a third candidate RAR including a first field indicating not to send a preamble over at least the second time-frequency resource has not been received in the first time window.

In an embodiment, if the first RAR includes a RAPID field and a Random Access Preamble identifier in the RAPID field does not match a PREAMBLE_INDEX of a preamble sent over at least one time-frequency resource of the K1 time-frequency resources, or if the first RAR is the second candidate RAR, or if the first RAR is the third candidate RAR, the first signaling is continuously monitored; and the monitoring the first signaling in the first time window is used for determining whether to send a preamble over at least the second time-frequency resource.

In an embodiment, "not sending a preamble over at least the second time-frequency resource" includes: not sending a preamble over the second time-frequency resource.

In an embodiment, "not sending a preamble over at least the second time-frequency resource" includes: not sending a preamble over any time-frequency resource whose start moment is later than the moment at which the first RAR is received among the K1 time-frequency resources.

In an embodiment, "not sending a preamble over at least the second time-frequency resource" includes: not sending a preamble over each time-frequency resource whose start moment is later than the moment at which the first RAR is received among the K1 time-frequency resources.

In an embodiment, "sending a preamble over at least the second time-frequency resource" includes: sending a preamble over the second time-frequency resource.

In an embodiment, "sending a preamble over at least the second time-frequency resource" includes: sending a preamble over any time-frequency resource whose start moment is later than the moment at which the first RAR is received among the K1 time-frequency resources.

In an embodiment, "sending a preamble over at least the second time-frequency resource" includes: sending a preamble over each time-frequency resource whose start moment is later than the moment at which the first RAR is received among the K1 time-frequency resources.

In an embodiment, the monitoring the first signaling in the first time window and the content of the first RAR are both used for determining whether to send a preamble over at least the second time-frequency resource.

In an embodiment, if the first RAR is not a first candidate RAR that includes a RAPID field including a Random Access Preamble identifier that matches an identifier of a preamble sent over at least one time-frequency resource in the K1 time-frequency resources and the first time window is running, a preamble is sent over at least the second time-frequency resource.

### Embodiment 8

Embodiment 8 exemplarily shows a flowchart of transmission of a radio signal according to yet another embodiment of this application, as shown in FIG. 8. It should be particularly noted that the order in this embodiment does not constitute a limitation on the orders of signal transmissions and implementations in this application.

For **First node U01:** Step S8101: Determine that the first time window expires. Step S8102: Update a first counter according to K1 as a response to the expiration of the first time window.

In Embodiment 8, the first counter is configured to count a number of preambles sent.

In an embodiment, the first signaling is not received before the first time window expires.

In an embodiment, the first signaling is received before the first time window expires.

In an embodiment, the first RAR is not received before the first time window expires.

In an embodiment, the first RAR is received before the first time window expires, where the first RAR is the first candidate RAR, the first RAR includes a RAPID field, and a Random Access Preamble identifier in the RAPID field does not match a PREAMBLE_INDEX of a preamble sent over at least one time-frequency resource of the K1 time-frequency resources.

In an embodiment, before the first time window expires, a first candidate RAR that includes a RAPID field including a Random Access Preamble identifier that does not match a PREAMBLE_INDEX of a preamble sent over at least one time-frequency resource in the K1 time-frequency resources is not received.

In an embodiment, the first RAR is received before the first time window expires, where the first RAR is the second candidate RAR.

In an embodiment, the second candidate RAR is not received before the first time window expires.

In an embodiment, the first RAR is received before the first time window expires, where the first RAR is the third candidate RAR.

In an embodiment, the third candidate RAR is not received before the first time window expires.

In an embodiment, before the first time window expires, a first candidate RAR that includes a RAPID field including a Random Access Preamble identifier that does not match an identifier of a preamble sent over at least one time-frequency resource in the K1 time-frequency resources is not received.

In an embodiment, as a response to that the first time window expires and that a random access response that includes a RAPID field including a Random Access Preamble identifier that does not match an identifier of a preamble sent over at least one time-frequency resource in the K1 time-frequency resources is not received, the first counter is updated according to K1.

In an embodiment, the expiration of the first time window means that the first time window reaches a maximum value of the first time window, where the first time window is counted up.

In an embodiment, the expiration of the first time window means that the first time window reaches 0, where the first time window is counted down.

In an embodiment, as a response to the expiration of the first time window, it is determined that the random access response has not been successfully received.

In an embodiment, the "updating the first counter according to K1" includes: increasing a value of the first counter by K1.

In an embodiment, the "updating the first counter according to K1" includes: increasing the value of the first counter by K2, where K2 is not greater than K1, and K2 is a number of different preambles sent over the K1 time-frequency resources.

In an embodiment, the first counter is PREAMBLE_TRANSMISSION_COUNTER.

In an embodiment, a name of the first counter includes PREAMBLE_TRANSMISSION_COUNTER.

In an embodiment, the name of the first counter includes at least one of PREAMBLE, TRANSMISSION, COUNTER, CE, COVERAGE, or ENHANCEMENT.

In an embodiment, when the first preamble is sent, the value of the first counter is equal to 1.

In an embodiment, when the first preamble is sent, the value of the first counter is greater than 1.

### Embodiment 9

Embodiment 9 exemplarily shows a schematic diagram of a MAC subheader of a third candidate RAR according to an embodiment of this application, as shown in FIG. 9. In FIG. 9, each solid-line block indicates at least one field; the solid-line block 901 includes the first field; and a dashed-line block 9.1, a dashed-line block 9.2, and a dashed-line block 9.3 are each an implementation of the solid-line block 901. It should be particularly noted that this embodiment does not limit the size and position of each field included in the solid-line block 901 in this application.

In Embodiment 9, the third candidate RAR only includes one MAC subheader, a format of the MAC subheader includes at least an E field, a T field, and a first field, and the MAC subheader occupies one octet; the E field occupies 1 bit, and the E field is located at a highest bit in the MAC subheader; the T field occupies 1 bit, and the T field immediately follows the E field; and the first field is a field after the T field.

In an embodiment, in FIG. 9, the MAC subheader of the third candidate RAR includes the E field, the T field, and the block 901.

In an embodiment, all fields included in the solid-line block 901 occupy a total of 6 bits.

In an embodiment, the dashed-line block 9.1 exists.

In a sub-embodiment of this embodiment, the format of the MAC subheader includes an R field and a BI field.

In a sub-embodiment of this embodiment, the format of the MAC subheader includes an E field, a T field, an R field, a first field, and a BI field.

In a sub-embodiment of this embodiment, the first field occupies 1 bit, the R field occupies 1 bit, and the BI field occupies 4 bits.

In a sub-embodiment of this embodiment, the first field occupies 2 bits, the R field occupies 1 bit, and the BI field occupies 3 bits.

In a sub-embodiment of this embodiment, the first field occupies 1 bit, the R field occupies 2 bits, and the BI field occupies 3 bits.

In a sub-embodiment of this embodiment, the first field is before the R field.

In a sub-embodiment of this embodiment, the first field is after the R field.

In a sub-embodiment of this embodiment, the first field is between the R fields.

In a sub-embodiment of this embodiment, the dashed-line block 9.2 does not exist, and the dashed-line block 9.3 does not exist.

In an embodiment, the dashed-line block 9.2 exists.

In a sub-embodiment of this embodiment, the format of the MAC subheader does not include an R field, and the format of the MAC subheader includes a BI field.

In a sub-embodiment of this embodiment, the format of the MAC subheader includes an E field, a T field, a first field, and a BI field.

In a sub-embodiment of this embodiment, the first field occupies 2 bits, and the BI field occupies 4 bits.

In a sub-embodiment of this embodiment, the first field occupies 3 bits, and the BI field occupies 3 bits.

In a sub-embodiment of this embodiment, the dashed-line block 9.1 does not exist, and the dashed-line block 9.3 does not exist.

In an embodiment, the dashed-line block 9.3 exists.

In a sub-embodiment of this embodiment, the format of the MAC subheader includes an R field, and the format of the MAC subheader does not include a BI field.

In a sub-embodiment of this embodiment, the format of the MAC subheader includes an E field, a T field, a first field, and an R field.

In a sub-embodiment of this embodiment, the first field occupies 4 bits, and the R field occupies 2 bits.

In a sub-embodiment of this embodiment, the first field occupies 3 bits, and the R field occupies 3 bits.

In a sub-embodiment of this embodiment, the first field occupies 2 bits, and the R field occupies 4 bits.

In a sub-embodiment of this embodiment, the first field occupies 1 bit, and the R field occupies 5 bits.

In a sub-embodiment of this embodiment, the first field is after the R field.

In a sub-embodiment of this embodiment, the first field is before the R field.

In a sub-embodiment of this embodiment, the first field is between the R fields.

In a sub-embodiment of this embodiment, the dashed-line block 9.1 does not exist, and the dashed-line block 9.2 does not exist.

In an embodiment, the third candidate RAR is used for PRACH coverage enhancement.

In an embodiment, the third candidate RAR is used only for PRACH coverage enhancement.

In an embodiment, the third candidate RAR is used only for NR PRACH coverage enhancement.

### Embodiment 10

Embodiment 10 exemplarily shows a flowchart of transmission of a second preamble according to an embodiment of this application, as shown in FIG. 10. It should be particularly noted that the order in this embodiment does not constitute a limitation on the orders of signal transmissions and implementations in this application.

For **First node U01:** Step S10101: Send a second preamble over a target time-frequency resource. Step S10102: Restart the first time window at a second moment. Step S10103: Monitor a first signaling in the first time window.

For **Second node N02:** Step S10201: Receive the second preamble.

In Embodiment 10, the second moment is related to a cut-off moment of the target time-frequency resource; and the target time-frequency resource is a time-frequency resource in the K1 time-frequency resources other than the first time-frequency resource.

In an embodiment, the first time window is restarted at the second moment if the first time window is running.

In an embodiment, the first time window is restarted at the second moment only when the first time window is running.

In an embodiment, the "restarting the first time window" includes: restarting timing of the first time window.

In an embodiment, the "restarting the first time window" includes: causing the first time window to run again.

In an embodiment, the "restarting the first time window" includes: causing the first time window to run starting from 0 again, where the first time window is counted up.

In an embodiment, the "restarting the first time window" includes: causing the first time window to run starting from a maximum value of the first time window again, where the first time window is counted down.

In an embodiment, the target time-frequency resource is a given time-frequency resource in the K1 time-frequency resources after the first time-frequency resource.

In an embodiment, the target time-frequency resource is a time-frequency resource in the K1 time-frequency resources that is adjacent to the first time-frequency resource.

In an embodiment, the target time-frequency resource is any time-frequency resource in the K1 time-frequency resources after the first time-frequency resource.

In an embodiment, the target time-frequency resource is the second time-frequency resource.

In an embodiment, the second preamble is the same as the first preamble.

In an embodiment, the second preamble is different from the first preamble.

In an embodiment, the second moment is related to a second CSS.

In an embodiment, the second moment is related to a second CORESET.

In an embodiment, the first signaling is monitored on a second common search space (CSS).

In an embodiment, the second CSS is associated with at least one CORESET.

In an embodiment, the second CSS is associated with a CORESET.

In an embodiment, the second CSS is associated with a second CORESET.

In an embodiment, the second CSS is a search space to which the first signaling belongs.

In an embodiment, the second CSS is the first CSS.

In an embodiment, the second CSS is different from the first CSS.

In an embodiment, the second moment is related to a second PDCCH occasion.

In an embodiment, the second moment is the second PDCCH occasion.

In an embodiment, the second moment is related to at least one of the cut-off moment of the target time-frequency resource, the second CSS, or the second CORESET.

In an embodiment, the second moment is related to the cut-off moment of the target time-frequency resource, the second CSS, and the second CORESET.

In an embodiment, the second moment is related to the cut-off moment of the target time-frequency resource and the second PDCCH occasion.

In an embodiment, the second moment is the cut-off moment of the target time-frequency resource.

In an embodiment, the second moment is the first symbol of an earliest CORESET after the cut-off moment of the target time-frequency resource, which is for the second CSS and is used for receiving a PDCCH.

In an embodiment, the second moment is an M2^{th} symbol of the second CORESET, and M2 is greater than 1.

In an embodiment, the second moment is the first symbol of the second CORESET.

In an embodiment, the second PDCCH occasion is the first PDCCH occasion after the cut-off moment of the target time-frequency resource.

In an embodiment, the second PDCCH occasion is related to the second CSS.

In an embodiment, the second PDCCH occasion is related to the second CORESET.

In an embodiment, the second PDCCH occasion is related to the second CSS and the second CORESET.

In an embodiment, the second PDCCH occasion is determined according to a frame structure.

In an embodiment, the second PDCCH occasion is determined according to an RRC configuration.

In an embodiment, the second PDCCH occasion is preconfigured.

In an embodiment, the second PDCCH occasion is predefined.

In an embodiment, the second CORESET is associated with the second CSS.

In an embodiment, the second CORESET is a CORESET that is for the second CSS and that is used for receiving the PDCCH and that is after the cut-off moment of the target time-frequency resource.

In an embodiment, the second CORESET is an earliest CORESET after the cut-off moment of the target time-frequency resource, which is for the second CSS and is used for receiving a PDCCH.

In an embodiment, the second CORESET is a CORESET to which the first signaling belongs.

In an embodiment, the cut-off moment of the target time-frequency resource is the last symbol of a PRACH occasion corresponding to a PRACH transmission for the second preamble.

In an embodiment, the cut-off moment of the target time-frequency resource is a moment at which transmission of the second preamble ends.

In an embodiment, the second moment is the cut-off moment of the target time-frequency resource or a moment after the cut-off moment of the target time-frequency resource.

In an embodiment, the second moment is the cut-off moment of the target time-frequency resource.

In an embodiment, the second moment is after the cut-off moment of the target time-frequency resource.

In an embodiment, the second moment is the first PDCCH occasion after the cut-off moment of the target time-frequency resource.

In an embodiment, the second moment is a P2^{th} symbol after the cut-off moment of the target time-frequency resource.

In an embodiment, the second moment is a P2^{th} slot after the cut-off moment of the target time-frequency resource.

In an embodiment, P2 is predefined.

In an embodiment, P2 is determined according to the first PDCCH occasion after the cut-off moment of the target time-frequency resource.

In an embodiment, P2 is a positive integer.

In an embodiment, P2 is a non-negative integer.

### Embodiment 11

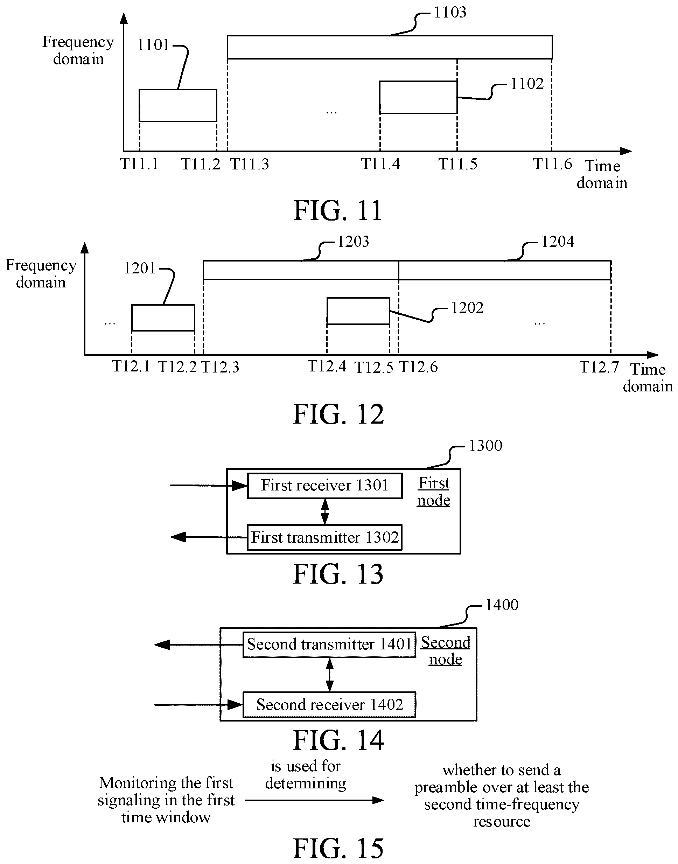

Embodiment 11 exemplarily shows a schematic diagram of K1 time-frequency resources and a first time window according to an embodiment of this application, as shown in FIG. 11. In FIG. 11, a horizontal axis represents time domain, and a vertical axis represents frequency domain; a block 1101 and a block 1102 each represent one time-frequency resource in the K1 time-frequency resources; the block 1101 represents the first time-frequency resource; the block 1102 represents the second time-frequency resource; an ellipsis represents time-frequency resources in the K1 time-frequency resources other than the first time-frequency resource and the second time-frequency resource; and a block 1103 represents the first time window. It should be particularly noted that this example does not limit whether any two of the K1 time-frequency resources in this application overlap in frequency domain, and does not limit whether any two of the K1 time-frequency resources in this application overlap in time domain.

In Embodiment 11, a moment T11.1 is the start moment of the first time-frequency resource; a moment T11.2 is the cut-off moment of the first time-frequency resource; a moment T11.3 is the first moment; a moment T11.4 is the start moment of the second time-frequency resource; a moment T11.5 is the cut-off moment of the second time-frequency resource; and a moment T11.6 is the expiration moment of the first time window.

In an embodiment, at least one time-frequency resource of the K1 time-frequency resources exists between the moment T11.2 and the moment T11.4; and K1 is greater than 3.

In an embodiment, no time-frequency resource in the K1 time-frequency resources exists between the moment T11.2 and the moment T11.4; and K1 is equal to 2.

In a sub-embodiment of this embodiment, the moment T11.2 and the moment T11.4 are consecutive in time domain.

In a sub-embodiment of this embodiment, the moment T11.2 and the moment T11.4 are not consecutive in time domain.

In a sub-embodiment of this embodiment, the moment T11.3 is between the moment T11.2 and the moment T11.4.

In a sub-embodiment of this embodiment, the moment T11.3 is after the moment T11.4.

In an embodiment, a time interval between the moment T11.3 and the moment T11.6 is equal to the maximum value of the first time window.

In an embodiment, the first time window is not restarted within a time interval between the moment T11.3 and the moment T11.6.

In an embodiment, the first time window is started at the moment T11.3.

In an embodiment, the first time window expires at the moment T11.6.

In an embodiment, the first signaling is received before the moment T11.6.

In an embodiment, the first signaling is not received before the moment T11.6.

In an embodiment, the first RAR is received before the moment T11.6, where the first RAR is the first candidate RAR.

In an embodiment, the first RAR is not received before the moment T11.6, where the first RAR is the first candidate RAR.

In an embodiment, the first RAR is received before the moment T11.6, where the first RAR is the second candidate RAR.

In an embodiment, the first RAR is not received before the moment T11.6, where the first RAR is the second candidate RAR.

In an embodiment, the first RAR is received before the moment T11.6, where the first RAR is the third candidate RAR.

In an embodiment, the first RAR is not received before the moment T11.6, where the first RAR is the third candidate RAR.

In an embodiment, a preamble is sent over each of the K1 time-frequency resources before the moment T11.6.

In an embodiment, no preamble is sent over at least one time-frequency resource in the K1 time-frequency resources before the moment T11.6.

In an embodiment, the first time window is stopped before the moment T11.6.

In an embodiment, the first time window is not stopped before the moment T11.6.

In an embodiment, the first time window does not expire.

In an embodiment, the first time window expires.

In an embodiment, the ellipsis exists.

In an embodiment, the ellipsis does not exist.

### Embodiment 12

Embodiment 12 exemplarily shows a schematic diagram of K1 time-frequency resources and a first time window according to another embodiment of this application, as shown in FIG. 12. In FIG. 12, a horizontal axis represents time domain, and a vertical axis represents frequency domain; a block 1201 and a block 1202 represent two adjacent time-frequency resources in the K1 time-frequency resources; the block 1201 represents a time-frequency resource before the target time-frequency resource; the block 1202 represents the target time-frequency resource; an ellipsis represents time-frequency resources in the K1 time-frequency resources other than the time-frequency resource before the target time-frequency resource and the second time-frequency resource; and a block 1203 and a block 1204 represent the first time window. It should be particularly noted that this example does not limit whether any two of the K1 time-frequency resources in this application overlap in frequency domain, and does not limit whether any two of the K1 time-frequency resources in this application overlap in time domain.

In Embodiment 12, the moment T12.1 is a start moment of the adjacent time-frequency resource before the target time-frequency resource; the moment T12.2 is a cut-off moment of the adjacent time-frequency resource before the target time-frequency resource; the moment T12.3 is a moment at which the first time window is started or restarted; the moment T12.4 is the start moment of the target time-frequency resource; the moment T12.5 is the cut-off moment of the target time-frequency resource; the moment T12.6 is a moment at which the first time window is restarted; and the moment T12.7 is the expiration moment of the first time window.

In an embodiment, the moment T12.2 and the moment T12.4 are consecutive in time domain.

In an embodiment, the moment T12.2 and the moment T12.4 are not consecutive in time domain.

In an embodiment, the moment T12.3 is between the moment T12.2 and the moment T12.4.

In an embodiment, the moment T12.3 is after the moment T12.4.

In an embodiment, a time interval between the moment T12.6 and the moment T12.7 is equal to the maximum value of the first time window.

In an embodiment, the target time-frequency resource is the second time-frequency resource.

In an embodiment, the target time-frequency resource is a time-frequency resource before the second time-frequency resource and after the first time-frequency resource.

In an embodiment, the target time-frequency resource is any time-frequency resource after the first time-frequency resource.

In an embodiment, the first time window is not restarted within a time interval between the moment T12.6 and the moment T12.7.

In an embodiment, the first time window is restarted within the time interval between the moment T12.6 and the moment T12.7.

In an embodiment, the moment T12.3 is the first moment.

In an embodiment, the moment T12.6 is the second moment.

In an embodiment, the moment T12.3 is the first moment, and the moment T12.6 is the second moment.

In an embodiment, a time interval between the moment T12.3 and the moment T12.6 is less than the maximum value of the first time window.

In an embodiment, the adjacent time-frequency resource before the target time-frequency resource is the first time-frequency resource.

In an embodiment, the adjacent time-frequency resource before the target time-frequency resource is a time-frequency resource after the first time-frequency resource.

In an embodiment, the target time-frequency resource is the second time-frequency resource.

In an embodiment, the target time-frequency resource is a time-frequency resource before the second time-frequency resource.

In an embodiment, the first time window is started at the moment T12.3; and the block 1201 represents the first time-frequency resource.

In an embodiment, the first time window is restarted at the moment T12.6; and the block 1201 represents a time-frequency resource after the first time-frequency resource.

In an embodiment, the first time window is restarted at the moment T12.6.

In an embodiment, the first time window does not expire at the moment T12.6.

In an embodiment, the first time window expires at the moment T12.7.

In an embodiment, the first signaling is received before the moment T12.7.

In an embodiment, the first signaling is not received before the moment T12.7.

In an embodiment, the first RAR is received before the moment T12.7, where the first RAR is the first candidate RAR.

In an embodiment, the first RAR is not received before the moment T12.7, where the first RAR is the first candidate RAR.

In an embodiment, the first RAR is received before the moment T12.7, where the first RAR is the second candidate RAR.

In an embodiment, the first RAR is not received before the moment T12.7, where the first RAR is the second candidate RAR.

In an embodiment, the first RAR is received before the moment T12.7, where the first RAR is the third candidate RAR.

In an embodiment, the first RAR is not received before the moment T12.7, where the first RAR is the third candidate RAR.

In an embodiment, a preamble is sent over each of the K1 time-frequency resources before the moment T12.7.

In an embodiment, no preamble is sent over at least one time-frequency resource in the K1 time-frequency resources before the moment T12.7.

In an embodiment, the first time window is stopped before the moment T12.7.

In an embodiment, the first time window is not stopped before the moment T12.7.

In an embodiment, the first time window is restarted within a time interval between the moment T12.6 and the moment T12.7.

In an embodiment, the first time window is not restarted within the time interval between the moment T12.6 and the moment T12.7.

In an embodiment, the first time window does not expire.

In an embodiment, the first time window expires.

In an embodiment, the ellipsis exists before the moment T12.1.

In an embodiment, the ellipsis does not exist before the moment T12.1.

In an embodiment, the ellipsis exists after the moment T12.6.

In an embodiment, the ellipsis does not exist after the moment T12.6.

### Embodiment 13

Embodiment 13 exemplarily shows a structural block diagram of a processing apparatus used in a first node according to an embodiment of this application, as shown in FIG. 13. In FIG. 13, the processing apparatus 1300 in the first node includes a first receiver 1301 and a first transmitter 1302.

The first receiver 1301 is configured to determine K1, where K1 is a positive integer greater than 1; start a first time window at a first moment; and monitor a first signaling in the first time window, where the first signaling is used for scheduling a random access response.

The first transmitter 1302 is configured to send a first preamble over at least a first time-frequency resource in K1 time-frequency resources, where the first time-frequency resource is an earliest time-frequency resource in the K1 time-frequency resources.

In Embodiment 13, the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

In an embodiment, the monitoring the first signaling in the first time window is used for determining whether to send a preamble over at least the second time-frequency resource.

In an embodiment, the first receiver 1301 is configured to receive the first signaling; and receive a first RAR according to scheduling by the first signaling.

In an embodiment, the first transmitter 1302 is configured to determine, according to content of the first RAR, whether to send a preamble over at least the second time-frequency resource.

In an embodiment, the first transmitter 1302 is configured to send a third message as a response to the first RAR being successfully received in the first time window,
where the K1 time-frequency resources are respectively associated with at least two downlink RS resources, the third message is associated with a target downlink RS resource, and the target downlink RS resource is one of the at least two downlink RS resources; and a CORESET or search space to which the first signaling belongs is used for determining the target downlink RS resource.

In an embodiment, the at least two downlink RS resources are K1 downlink RS resources.

In an embodiment, the at least two downlink RS resources are no more than K1 downlink RS resources.

In an embodiment, the first receiver 1301 is configured to determine that the first time window expires; and update a first counter according to K1 as a response to the expiration of the first time window,
where the first counter is configured to count a number of preambles sent.

In an embodiment, the first receiver 1301 restarts the first time window at a second moment; and the first transmitter 1302 sends a second preamble over a target time-frequency resource,
where the second moment is related to a cut-off moment of the target time-frequency resource; and the target time-frequency resource is a time-frequency resource in the K1 time-frequency resources other than the first time-frequency resource.

In an embodiment, K1 is used for determining the expiration moment of the first time window.

In an embodiment, the first receiver 1301 includes the antenna 452, the receiver 454, the multi-antenna receive processor 458, the receive processor 456, the controller/processor 459, the memory 460, and the data source 467 shown in FIG. 4 of this application.

In an embodiment, the first receiver 1301 includes the antenna 452, the receiver 454, the multi-antenna receive processor 458, and the receive processor 456 shown in FIG. 4 of this application.

In an embodiment, the first receiver 1301 includes the antenna 452, the receiver 454, and the receive processor 456 shown in FIG. 4 of this application.

In an embodiment, the first transmitter 1302 includes the antenna 452, the transmitter 454, the multi-antenna transmit processor 457, the transmit processor 468, the controller/processor 459, the memory 460, and the data source 467 shown in FIG. 4 of this application.

In an embodiment, the first transmitter 1302 includes the antenna 452, the transmitter 454, the multi-antenna transmit processor 457, and the transmit processor 468 shown in FIG. 4 of this application.

In an embodiment, the first transmitter 1302 includes the antenna 452, the transmitter 454, and the transmit processor 468 shown in FIG. 4 of this application.

### Embodiment 14

Embodiment 14 exemplarily shows a structural block diagram of a processing apparatus used in a second node according to an embodiment of this application, as shown in FIG. 14. In FIG. 14, the processing apparatus 1400 in the second node includes a second transmitter 1401 and a second receiver 1402.

The second receiver 1402 is configured to receive a first preamble.

In Embodiment 14, K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than the cut-off moment of the second time-frequency resource.

In an embodiment, any two time-frequency resources in the K1 time-frequency resources do not overlap in time domain.

In an embodiment, at least two time-frequency resources in the K1 time-frequency resources do not overlap in time domain.

In an embodiment, the monitoring the first signaling in the first time window is used for determining whether to send a preamble over at least the second time-frequency resource.

In an embodiment, the second transmitter 1401 is configured to send the first signaling; and send a first RAR, where the first signaling is used for scheduling the first RAR.

In an embodiment, the sender of the first preamble determines, according to content of the first RAR, whether to send a preamble over at least the second time-frequency resource.

In an embodiment, the second receiver 1402 is configured to receive a third message, where successful receiving of the first RAR by the sender of the first preamble in the first time window is used for determining to send the third message; the K1 time-frequency resources are respectively associated with at least two downlink RS resources, the third message is associated with a target downlink RS resource, and the target downlink RS resource is one of the at least two downlink RS resources; and a CORESET or search space to which the first signaling belongs is used for determining the target downlink RS resource.

In an embodiment, the at least two downlink RS resources are K1 downlink RS resources.

In an embodiment, the at least two downlink RS resources are no more than K1 downlink RS resources.

In an embodiment, determining by the sender of the first preamble that the first time window expires is used for determining to update a first counter according to K1, where the first counter is configured to count a number of preambles sent.

In an embodiment, the first time window is restarted by the sender of the first preamble at a second moment; and a second preamble is received, where the second preamble is sent by the sender of the first preamble over a target time-frequency resource; the second moment is related to a cut-off moment of the target time-frequency resource; and the target time-frequency resource is a time-frequency resource in the K1 time-frequency resources other than the first time-frequency resource.

In an embodiment, K1 is used for determining the expiration moment of the first time window.

In an embodiment, the second transmitter 1401 includes an antenna 420, a transmitter 418, a multi-antenna transmit processor 471, a transmit processor 416, a controller/processor 475, and a memory 476 shown in FIG. 4 of this application.

In an embodiment, the second transmitter 1401 includes the antenna 420, the transmitter 418, the multi-antenna transmit processor 471, and the transmit processor 416 shown in FIG. 4 of this application.

In an embodiment, the second transmitter 1401 includes the antenna 420, the transmitter 418, and the transmit processor 416 shown in FIG. 4 of this application.

In an embodiment, the second receiver 1402 includes the antenna 420, the receiver 418, the multi-antenna receive processor 472, the receive processor 470, the controller/processor 475, and the memory 476 shown in FIG. 4 of this application.

In an embodiment, the second receiver 1402 includes the antenna 420, the receiver 418, the multi-antenna receive processor 472, and the receive processor 470 shown in FIG. 4 of this application.

In an embodiment, the second receiver 1402 includes the antenna 420, the receiver 418, and the receive processor 470 shown in FIG. 4 of this application.

### Embodiment 15

Embodiment 15 exemplarily shows a schematic diagram of monitoring a first signaling being used for determining whether to send a preamble according to an embodiment of this application, as shown in FIG. 15.

In Embodiment 15, the monitoring the first signaling in the first time window is used for determining whether to send a preamble over at least the second time-frequency resource.

In an embodiment, that "the monitoring the first signaling in the first time window is used for determining whether to send a preamble over at least the second time-frequency resource" includes: whether the first time window is running is used for determining whether to send a preamble over at least the second time-frequency resource.

In an embodiment, that the first time window is running is used for determining that the first signaling is being monitored.

In an embodiment, that the first time window is not running is used for determining that the first signaling is not being monitored.

In an embodiment, if the first time window is running, a preamble is sent over at least the second time-frequency resource.

In an embodiment, if the first time window is not running, no preamble is sent over at least the second time-frequency resource.

In an embodiment, that "the monitoring the first signaling in the first time window is used for determining whether to send a preamble over at least the second time-frequency resource" includes: whether the monitoring for the first signaling in the first time window is stopped is used for determining whether to send a preamble over at least the second time-frequency resource.

In an embodiment, if the monitoring for the first signaling in the first time window is not stopped, a preamble is sent over at least the second time-frequency resource.

In an embodiment, if the monitoring for the first signaling in the first time window is stopped, no preamble is sent over at least the second time-frequency resource.

In an embodiment, at a start moment of any time-frequency resource in the K1 time-frequency resources after the first time-frequency resource, if the monitoring for the first signaling in the first time window is not stopped, a preamble is sent over the time-frequency resource.

In an embodiment, at a start moment of any time-frequency resource in the K1 time-frequency resources after the first time-frequency resource, if the monitoring for the first signaling in the first time window is stopped, no preamble is sent over the time-frequency resource and any time-frequency resource after the time-frequency resource.

In an embodiment, at a start moment of any time-frequency resource in the K1 time-frequency resources after the first time-frequency resource, if the first time window is running, a preamble is sent over the time-frequency resource.

In an embodiment, at a start moment of any time-frequency resource in the K1 time-frequency resources after the first time-frequency resource, if the first time window is not running, no preamble is sent over the time-frequency resource and any time-frequency resource after the time-frequency resource.

In an embodiment, after the first time window is stopped, no preamble is sent over each time-frequency resource whose start moment is later than a moment at which the first time window is stopped among the K1 time-frequency resources.

In an embodiment, if the first signaling is detected in the first time window, no preamble is sent over the second time-frequency resource.

In an embodiment, if the first signaling is not detected in the first time window, a preamble is sent over the second time-frequency resource.

In an embodiment, if the first signaling is not detected within a time interval from the first moment to the start moment of the second time-frequency resource, a preamble is sent over the second time-frequency resource.

In an embodiment, if the first signaling is detected within the time interval from the first moment to the start moment of the second time-frequency resource, no preamble is sent over the second time-frequency resource.

In an embodiment, if the first signaling is not detected within a time interval from the first moment to a start moment of any time-frequency resource in the K1 time-frequency resources after the first time-frequency resource, a preamble is sent over the time-frequency resource.

In an embodiment, if the first signaling is detected within a time interval from the first moment to a start moment of any time-frequency resource in the K1 time-frequency resources after the first time-frequency resource, no preamble is sent over the time-frequency resource.

In an embodiment, the monitoring for the first signaling in the first time window is used for determining whether to send a preamble over a remaining time-frequency resource in the K1 time-frequency resources.

In an embodiment, the remaining time-frequency resource is a time-frequency resource that has not started in time domain.

In an embodiment, if the first signaling is detected within a time interval from the first moment to a start moment of any time-frequency resource in the K1 time-frequency resources after the first time-frequency resource, no preamble is sent over the time-frequency resource and any time-frequency resource after the time-frequency resource.

In an embodiment, if the first signaling is detected at a moment in the first time window and the moment is earlier than a start moment of at least one time-frequency resource in the K1 time-frequency resources, no preamble is sent over each of the at least one time-frequency resource.

In an embodiment, if the first signaling is detected and received and the first RAR is received, it is determined according to the content of the first RAR whether to send a preamble over at least the second time-frequency resource.

A person of ordinary skill in the art may understand that all or some of the steps of the foregoing methods may be implemented by a program instructing relevant hardware. The program may be stored in a computer-readable storage medium such as a read-only memory, a magnetic disk, an optical disc, or the like. Optionally, all or some of the steps of the foregoing embodiments may also be implemented by one or more integrated circuits. Correspondingly, the modules and units in the foregoing embodiments may be implemented in the form of hardware, or may be implemented in the form of software function modules. This application is not limited to any particular combination of hardware and software. The user equipment, the terminal, and the UE in this application include, but are not limited to, a wireless communication device such as an unmanned aerial vehicle, a communication module on an unmanned aerial vehicle, a remote control aircraft, an aircraft, a small aircraft, a mobile phone, a tablet computer, a notebook computer, an in-vehicle communication device, a wireless sensor, a network access card, an Internet of Things terminal, an RFID terminal, an NB-IOT terminal, a machine type communication (MTC) terminal, an enhanced MTC (eMTC) terminal, a data card, a network access card, an in-vehicle communication device, a low-cost mobile phone, and a low-cost tablet computer. The base station or system device in this application includes, but is not limited to, a wireless communication device such as a macrocellular base station, a microcellular base station, a home base station, a relay base station, an NR NodeB (gNB), and a transmitter receiver point (TRP).

The above description is only example embodiments of this application, and is not intended to limit the scope of this application. Any modification, equivalent replacement, or improvement made without departing from the spirit and principle of this application shall fall within the protection scope of this application.

## Claims

1. A first node used in wireless communication, comprising:
a first receiver, configured to determine K1, wherein K1 is a positive integer greater than 1; start a first time window at a first moment; and monitor a first signaling in the first time window, wherein the first signaling is used for scheduling a random access response;
a first transmitter, configured to send a first preamble over at least a first time-frequency resource in K1 time-frequency resources, wherein any two time-frequency resources in the K1 time-frequency resources do not overlap in time domain, and the first time-frequency resource is an earliest time-frequency resource in the K1 time-frequency resources;
wherein the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

2. The first node according to claim 1, wherein the monitoring the first signaling in the first time window is used for determining whether to send a preamble over at least the second time-frequency resource.

3. The first node according to claim 2, comprising:
the first receiver, configured to receive the first signaling; and receive a first RAR according to scheduling by the first signaling.

4. The first node according to claim 3, comprising:
the first transmitter, configured to determine, according to content of the first RAR, whether to send a preamble over at least the second time-frequency resource.

5. The first node according to claim 3 or 4, comprising:
the first transmitter, configured to send a third message as a response to the first RAR being successfully received in the first time window;
wherein the K1 time-frequency resources are respectively associated with K1 downlink RS resources, the third message is associated with a target downlink RS resource, and the target downlink RS resource is one of the K1 downlink RS resources; and a CORESET or search space to which the first signaling belongs is used for determining the target downlink RS resource.

6. The first node according to any one of claims 1 to 5, comprising:
the first receiver, configured to determine that the first time window expires; and update a first counter according to K1 as a response to the expiration of the first time window;
wherein the first counter is configured to count a number of preambles sent.

7. The first node according to any one of claims 1 to 6, comprising:
the first receiver, configured to restart the first time window at a second moment; and
the first transmitter, configured to send a second preamble over a target time-frequency resource;
wherein the second moment is related to a cut-off moment of the target time-frequency resource; and the target time-frequency resource is a time-frequency resource in the K1 time-frequency resources other than the first time-frequency resource.

8. The first node according to any one of claims 1 to 7, wherein K1 is used for determining an expiration moment of the first time window.

9. A second node used in wireless communication, comprising:
a second receiver, configured to receive a first preamble;
wherein K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, any two time-frequency resources in the K1 time-frequency resources do not overlap in time domain, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

10. A method in a first node used in wireless communication, comprising:
determining K1, wherein K1 is a positive integer greater than 1; starting a first time window at a first moment; monitoring a first signaling in the first time window, wherein the first signaling is used for scheduling a random access response; and sending a first preamble over at least a first time-frequency resource in K1 time-frequency resources, wherein any two time-frequency resources in the K1 time-frequency resources do not overlap in time domain, and the first time-frequency resource is an earliest time-frequency resource in the K1 time-frequency resources;
wherein the first moment is related to at least a cut-off moment of the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.

11. A method in a second node used in wireless communication, comprising:
receiving a first preamble;
wherein K1 is determined by a sender of the first preamble, and K1 is a positive integer greater than 1; a first time window is started at a first moment by the sender of the first preamble; a first signaling is monitored in the first time window by the sender of the first preamble, the first signaling being used for scheduling a random access response; the first preamble is sent by the sender of the first preamble over at least a first time-frequency resource in K1 time-frequency resources, any two time-frequency resources in the K1 time-frequency resources do not overlap in time domain, and the first time-frequency resource is an earliest time-frequency resource in the K1 time-frequency resources; the first moment is related to a cut-off moment of at least the first time-frequency resource; the first moment is not earlier than a cut-off moment of the first time-frequency resource and is earlier than a cut-off moment of a second time-frequency resource, the second time-frequency resource being a latest time-frequency resource in the K1 time-frequency resources; and an expiration moment of the first time window is later than a cut-off moment of the second time-frequency resource.
